# EUROPÄISCHE PATENTSCHRIFT

(11) **EP 3 743 011 B1**
(45) Veröffentlichungstag und Bekanntmachung des Hinweises auf die Patenterteilung: **08.03.2023**
(21) Anmeldenummer: 18833222.5
(22) Anmeldetag: 20.12.2018
(51) Int. Cl.: A61C 13/00, A61C 13/01, A61C 13/10

(54) **VERFAHREN ZUR HERSTELLUNG EINER DENTALPROTHESE**
METHOD FOR PRODUCING A DENTAL PROSTHESIS
PROCÉDÉ DE FABRICATION D'UNE PROTHÈSE DENTAIRE

(30) Priorität: 25.01.2018 DE 102018101663
(43) Veröffentlichungstag der Anmeldung: 02.12.2020
(73) Patentinhaber: Kulzer GmbH, 63450 Hanau (DE)
(72) Erfinder: WEIGEL, Christian, 63538 Großkrotzenburg (DE); ZÄUNER, Mike, 61348 Bad Homburg (DE); RENZ, Karl-Heinz, 63755 Alzenau (DE)
(74) Vertreter: Schultheiss & Sterzel Patentanwälte PartG mbB
(86) Internationale Anmeldenummer: PCT/EP2018/086238
(87) Internationale Veröffentlichungsnummer: WO 2019/145100

(56) Entgegenhaltungen:
- EP-A1- 2 742 907
- WO-A1-2015/055793
- WO-A1-2016/128192

## Beschreibung

Die Erfindung betrifft ein Verfahren zur Herstellung einer Wachsprothese, wobei die Wachsprothese eine Prothesenbasis und mehrere Prothesenzähne aufweist, wobei das Verfahren unter Anwendung eines virtuellen dreidimensionalen Dentalprothesen-Modells der zu erzeugenden physischen Dentalprothese erfolgt.

Die Erfindung betrifft auch eine Wachsprothese und eine Dentalprothese hergestellt mit einem solchen Verfahren und eine Vorrichtung zum Durchführen eines solchen Verfahrens.

Der derzeit gängige Weg ist die analoge Erstellung von Dentalprothesen. Zur Herstellung der Prothesenbasis wird dazu derzeit meist ein analoges Verfahren verwendet, bei dem zunächst ein Abdruck des zahnlosen Kiefers des Patienten genommen wird. Aus diesem Abdruck wird ein Gipsmodell der Patientensituation gefertigt.

Zur Herstellung der Dentalprothese werden Prothesenzähne manuell und einzeln auf einer Wachsbasis auf dem Gipsmodell des unbezahnten Kiefers aufgestellt. Bei der Aufstellung der vorkonfektionierten Prothesenzähne werden diese der jeweiligen Mundsituation des Patienten vom Zahntechniker angepasst und gegebenenfalls auch vom Zahnarzt bei der Einprobe korrigiert.

Diese Wachsprothese wird im nächsten Schritt in einer Küvette mit Gips, Silikon oder Gel (je nach späterer Verarbeitungstechnik) eingebettet, um dann nach Aushärten des Einbettmaterials die Wachsbasis aus der Form heraus zu lösen, um einen Hohlraum für den Prothesenkunststoff zu schaffen. Die Prothesenzähne verbleiben dabei meist im Einbettmaterial, also in der Küvette. Ein entsprechender Kunststoff wird in den Hohlraum injiziert oder gegossen, dadurch erhält man nach der Aushärtung des Kunststoffs die Dentalprothese. Nach Aushärtung des Kunststoffs wird dieser nachbearbeitet, um die gewünschte Oberflächengüte zu erhalten.

Neben handwerklichen Techniken gewinnen digitale Fertigungsmethoden im Dentalbereich immer mehr an Bedeutung. Zahnersatz, wie zum Beispiel Kronen und Brücken, wird seit einigen Jahren mittels CAD/CAM-Technologien subtraktiv in Fräsverfahren hergestellt (CAM - Computer-Aided Manufacturing, Deutsch: rechnerunterstützte Fertigung, CAD - Computer-Aided Design, Deutsch: rechnerunterstützte Konstruktion).

Ein CAD/CAM-Verfahren zur Herstellung einer Dentalprothese ist aus der WO 91/07141 A1 bekannt, wobei bei diesem Verfahren eine Prothesenbasis auf der Basis eines Abdrucks aus einem Kunststoffblock gefräst wird.

Ferner gewinnen generative CAM-Verfahren wie SLM (Selective Laser Melting) zur Herstellung von Kronen, Brücken und Modellen sowie Stereolithographie und DLP (Digital light processing) für Dentalprodukte auf Polymerbasis wie zum Beispiel Provisorien, Prothesen, KFO-Apparaturen (Kiefer-Orthopädie-Apparaturen), Aufbissschienen, Bohrschablonen oder Dentalmodellen immer mehr an Bedeutung. Dabei ist die Herstellung von Zahnersatz auf Acrylatbasis mittels RP-Verfahren (Rapid-Prototyping-Verfahren) bisher immer noch starken Einschränkungen unterworfen. Mehrfarbiger Zahnersatz oder Zahnersatz aus verschiedenen Polymer-Materialien (zum Beispiel für Schmelz- und Dentinmassen) zur Herstellung von hochwertigem und ästhetischem Zahnersatz ist bisher nur mittels aufwendiger RP-Maschinen mit mehreren Materialkammern oder mittels Klebe- und Fügetechniken herstellbar.

Ebenso ist die Herstellung von Materialkombinationen (zum Beispiel Legierungen und Polymere) mittels RP-Verfahren bisher sehr aufwendig und bisher nicht in Serienreife umgesetzt. Die generative Herstellung von ästhetisch anspruchsvollen Konfektionszähnen für Teil- oder Totalprothesen ist derzeit nicht möglich, da mittels Stereolithographie nur ein Material beziehungsweise eine Farbe gedruckt werden kann. Das Drucken von mehrfarbigen Konfektionszähnen ist derzeit nicht möglich. Aus diesem Grund wird die Prothesenbasis mittels CAM-Verfahren (beispielsweise Fräsen oder Drucken) hergestellt und vorkonfektionierte Prothesenzähne werden mit der Prothesenbasis verklebt. Hierbei kann die Prothesenbasis sowohl durch generative Verfahren (SLA, DLP, FDM, etc.) als auch durch subtraktive Verfahren (Fräsen und dergleichen) hergestellt werden. Die künstlichen Prothesenzähne können sowohl als Einzelzähne als auch als komplette Zahnreihen hergestellt und mit der Prothese verklebt werden.

Es gibt bereits erste Verfahren, wie beispielsweise die aus der DE 10 2009 056 752 A1 oder der WO 2013 124 452 A1 bekannten Verfahren, bei denen eine dentale Teil- beziehungsweise Totalprothese digital aufgestellt und über CAD/CAM-Verfahren produziert wird. Die EP 2 742 906 A1 offenbart ein Verfahren, bei dem ein Zahnbogen mit einer Abformmasse verbunden wird, wobei die Abformmasse in einem individualisierten Abformlöffel enthalten ist und einen Abdruck der Mundraumsituation des Patienten enthält. Die Oberfläche der Form mit dem Zahnbogen wird digitalisiert und anschließend rechnerisch ein virtuelles Modell des Zahnbogens möglichst passend in dem virtuellen Modell der Prothesenbasis positioniert und orientiert. Bei der abschließenden Fertigung müssen die Prothesenzähne einzeln und manuell auf die korrekte Passung in den dafür vorgesehenen Zahnfächern der Prothesenbasis kontrolliert werden, um sie anschließend einzukleben, wobei als Kontrollinstrument eine Transferschablone verwendet werden kann. Die WO 2016/091 762 A1 offenbart ein Verfahren zur Herstellung einer Dentalprothese, bei dem eine Schablone erzeugt wird, mit der mehrere Prothesenzähne in der gewünschten Lage und Orientierung zueinander an einer Prothesenbasis befestigt werden können. Aus DE 103 04 757 B4 ist ein Verfahren zur Herstellung von Zahnersatz bekannt, bei dem eine virtuelle Aufstellung der Zähne in ein virtuelles Modell erfolgt und die Herstellung einer Prothesenbasis auf der Basis des virtuellen Modells erfolgt. Die WO 2016/110 392 A1 offenbart ein Verfahren zur Herstellung einer Dentalprothese, bei dem ein plastisch verformbares Verbindungsmittel in Zahnfächer einer Prothesenbasis eingebracht wird, um eine manuelle Korrektur der Ausrichtung der Prothesenzähne in der Prothesenbasis zu ermöglichen.

Die WO 2016/128192 A1 offenbart ein Verfahren zur Herstellung einer Wachs- oder Kunststoffbasis zur Fertigung einer Dentalprothese auf Basis eines Modells des Mundraums eines Patienten. Aus der WO 2015/055793 A1 ist eine dentale Transferschablone bekannt, bei der eine Biss-Sperre vorgesehen ist, die einen Zahnreihenschluss verhindert.

Bei der Herstellung von herausnehmbarem Zahnersatz, wie Voll- und Teilprothesen, die mit Hilfe digitaler Daten mit einer CAD-Konstruktion gefertigt wurden, gibt es technische Lösungsansätze, die Daten der Prothesenbasis und der Zähne zu separieren. Die Prothesenbasis kann dabei durch ein additives oder auch subtraktives Fertigungsverfahren hergestellt werden. Als Prothesenzähne kommen konfektionierte Kunststoffzähne oder auch individuell hergestellte Prothesenzähne oder Zahnbögen aus den gleichen Ausgangsmaterialien in Frage. In jedem Fall müssen an der Prothesenbasis Zahnfächer zur Aufnahme dieser Prothesenzähne vorgesehen sein, in welche dann in einem nachgeschalteten manuellen Fertigungsschritt, die Prothesenzähne oder die Zahnbögen, zum Beispiel durch Kleben, befestigt werden.

Aus der EP 2 571 451 B1 und der EP 2 666 438 A2 sind Verfahren hierfür bekannt, bei denen vorkonfektionierte Prothesenzähne in einer Halterung in Wachs eingebettet werden und anschließend basal mittels CAM-Verfahren abgefräst werden. Die so gekürzten Prothesenzähne werden von dem Wachs befreit und anschließend in eine Prothesenbasis eingesetzt und dort eingeklebt, um eine Dentalprothese herzustellen.

Diese Verfahren haben den Nachteil, dass die Prothesenzähne einzeln in die Prothesenbasis eingesetzt und eingeklebt werden müssen und dabei Verwechslungen vorkommen können. Der richtige Ort zum Einsetzen der bearbeiteten Prothesenzähne in die Prothesenbasis muss dabei durch Ausprobieren gefunden werden. Die passende basale Form der Prothesenzähne muss für jeden Prothesenzahn individuell berechnet werden. Bei solchen Verfahren kann es zu Fehlsetzungen von Prothesenzähnen in der Prothesenbasis kommen oder diese Fehlsetzungen müssen mit zusätzlichen Maßnahmen verhindert werden. Bei der Verwendung von industriell gefertigten (und daher vorkonfektionierten) einzelnen Prothesenzähnen müssen diese in der Regel vor dem Verkleben basal gekürzt werden, um die Bisshöhe einzustellen beziehungsweise um mit der herzustellenden Dentalprothese eine optimale Okklusion zu erreichen.

Nachteilig ist bei den bisherigen Verfahren auch, dass beim Einkleben der Prothesenzähne Abweichungen in der Bisshöhe (der Okklusion) im Vergleich zu dem digitalen Modell auftreten können, da die Materialstärke des Klebstoffs zwischen den Prothesenzähnen und der Prothesenbasis nicht genau vorhergesagt werden kann. Dadurch müssen die Prothesenzähne anschließend okklusal nachgeschliffen und anschließend poliert werden. Zudem können durch eine ungleichmäßige Verteilung des Klebstoffs zwischen den Prothesenzähnen und der Prothesenbasis ungleichmäßige mechanische Eigenschaften entstehen, so dass die Stabilität der Dentalprothese nicht gleichmäßig ist. Des Weiteren kann es zu leichten Abweichungen in der Lage und Orientierung der Prothesenzähne in der Prothesenbasis im Vergleich zu dem virtuellen Dentalprothesen-Modell und in der Wachseinbettung kommen, die aufgrund von notwendigen Fertigungstoleranzen auftreten. Ferner kann es passieren, dass Prothesenzähne an den falschen Positionen in die Prothesenbasis eingesetzt werden.

Aus der EP 2 742 907 A1 ist ein Verfahren zur Herstellung einer Dentalprothese bekannt, bei dem vorkonfektionierte Prothesenzähne in Zahnfächer eines Rohlings aus Kunststoff eingesetzt werden. Die vorkonfektionierten Prothesenzähne werden entsprechend einem rechnerischen Modell basal zusammen mit dem Kunststoffrohling gekürzt. Eine derartig gefertigte Dentalprothese hat den Nachteil, dass die bearbeiteten Prothesenzähne an der basalen Seite als weiße Ovale in dem rosafarbenen Kunststoff sichtbar sind und dort nicht von Kunststoff bedeckt sind. Auch der Halt kann aufgrund einer fehlenden basalen Stützung leiden, insbesondere dann, wenn die Prothesenbasis sehr dünn ausgeführt wird und die Zahnfächer keine ausreichende Tiefe aufweisen. Ferner ist es bei dem dort beschriebenen Verfahren nicht möglich, eine Korrektur der Prothesenzahnaufstellung am Patienten vorzunehmen. Zur endgültigen Einpassung der Dentalprothese müssen die Prothesenzähne dann okklusal nachbearbeitet werden. Das ist nachteilig, da hierdurch die äußere Form der Prothesenzähne beeinträchtigt wird und eventuell vorhandene Oberflächenvergütungen der Prothesenzähne an diesen Stellen verloren gehen. Bei einer umfassenden okklusalen Bearbeitung kann auch die Kaufunktion der betroffenen Prothesenzähne beeinträchtigt werden.

Solche Verfahren haben ferner den Nachteil, dass insbesondere vorkonfektionierte Prothesenzähne oft okklusal und/oder basal nachbearbeitet werden müssen, wobei anschließend auch die Zahnfächer der Prothesenbasis beschliffen werden, um die Position und Lage der Prothesenzähne in der Dentalprothese anzupassen. In den meisten Fällen müssen bei vorkonfektionierten Prothesenzähnen, die die besten ästhetischen Ergebnisse liefern, diese vor dem Verkleben zumindest basal eingekürzt werden, um die Bisshöhe (die Okklusion) der Dentalprothese einzustellen, so dass sich die Notwendigkeit ergibt, hierzu ein rationelles und kostengünstiges Verfahren anzugeben.

Bei der Herstellung von hochwertigen und hochästhetischen Dentalprothesen unter Verwendung von solchen vorkonfektionierten Prothesenzähnen und einer mittels CAD/CAM-Verfahren gefertigten Prothesenbasis müssen die Prothesenzähne und die Prothesenbasis miteinander dauerhaft und kostengünstig verbunden werden. Das Verbinden der Prothesenzähne mit der Prothesenbasis soll daher möglichst leicht, unaufwendig und in wenigen Schritten erfolgen können. Da die Zahnfächer der Prothesenbasis meist nicht sehr tief angelegt werden können, haben die eingesetzten Prothesenzähne häufig nicht genug Führung, so dass eine Rotations- und auch Kippbewegung in oraler beziehungsweise lingualer Richtung jedes einzelnen Prothesenzahnes aber auch der Prothesenzähne zueinander, die Dentalzwischenräume betreffend, möglich ist. Die Positionierung und nachträgliche Korrektur der Prothesenzähne verwässert daher die Vorteile einer optimalen CAD-konstruierten Aufstellung und Abstimmung der Prothesenzähne in den Prothesenbasen für Ober- und Unterkiefer teilweise.

Die Aufgabe der Erfindung besteht also darin, die Nachteile des Stands der Technik zu überwinden. Insbesondere soll ein Verfahren bereitgestellt werden, mit dem eine einfache, für Fehler unanfällige und mit exakter Bisshöhe (Okklusion) eingestellte Herstellung der Dentalprothese durchführbar ist, sowie eine Vorrichtung bereitzustellen mit der die wesentlichen Verfahrensschritte umsetzbar sind. Dabei sollen moderne computergesteuerte Verfahren einsetzbar sein und vorhandene Daten und Techniken möglichst weitreichend nutzbar sein. Gleichzeitig soll eine geringfügige manuelle Korrektur der Lage und Position möglich sein und eine okklusale Bearbeitung der Prothesenzähne möglichst vermieden werden. Zudem sollen die Prothesenzähne möglichst ohne eine Fehlsetzung und mit möglichst geringen Abweichungen in der zuvor berechneten Orientierung und Lage an der Prothesenbasis befestigt werden können. Die fertige Dentalprothese soll möglichst ohne weitere Nachbearbeitung oder mit möglichst wenig manueller Nachbearbeitung einsatzbereit sein. Die Lage und Ausrichtung der Prothesenzähne in den Zahnfächern der Prothesenbasis sollen möglichst leicht und exakt einstellbar sein. Die bearbeiteten Prothesenzähne sollen dabei stabil in der Prothesenbasis gehalten werden können. Dabei soll möglichst auch eine Stabilisierung der Prothesenzähne an den basalen Seiten der Prothesenzähne durch die Prothesenbasis erfolgen.

Die Aufgaben der Erfindung werden gelöst durch ein Verfahren zur Herstellung einer Wachsprothese, wobei die Wachsprothese eine Prothesenbasis und mehrere basal bearbeitete vorkonfektionierte Prothesenzähne aufweist und wobei das Verfahren unter Verwendung eines virtuellen dreidimensionalen Dentalprothesen-Modells durchgeführt wird, wobei das Verfahren die folgenden Schritte umfasst:
A) Teilen des virtuellen dreidimensionalen Dentalprothesen-Modells der herzustellenden physischen Wachsprothese in zumindest ein virtuelles dreidimensionales Modell der Prothesenzähne und ein virtuelles dreidimensionales Modell der Prothesenbasis oder Verwenden zumindest eines vorhandenen virtuellen dreidimensionalen Modells der Prothesenzähne und eines vorhandenen virtuellen dreidimensionalen Modells der Prothesenbasis,
B) Bereitstellen eines Rohlings aus Wachs oder aus einem bei unter 80°C manuell formbaren, wachsartigen Kunststoff,
C) Subtraktives Bearbeiten des bereitgestellten Rohlings mit einer ersten CAM-Vorrichtung entsprechend den Daten der Oberseite des virtuellen dreidimensionalen Modells der Prothesenbasis,
D) Herstellen von mehreren Zahnfächern in der Oberseite des bearbeiteten Rohlings, wobei für jeden gemäß dem virtuellen dreidimensionalen Dentalprothesen-Modell einzusetzenden vorkonfektionierten Prothesenzahn ein Zahnfach in dem Rohling hergestellt wird, wobei die Zahnfächer derart tief ausgeführt werden, so dass jeder unbearbeitete vorkonfektionierte Prothesenzahn derart in das jeweilige Zahnfach einsetzbar ist, dass die Okklusionsebene der eingesetzten vorkonfektionierten Prothesenzähne der Okklusionsebene des virtuellen dreidimensionalen Dentalprothesen-Modells entspricht,
E) Einsetzen und Befestigen der unbearbeiteten vorkonfektionierten Prothesenzähne in die jeweiligen Zahnfächer des von der Oberseite bearbeiteten Rohlings,
F) Kürzen der basalen Seiten der in dem bearbeiteten Rohling befestigten vorkonfektionierten Prothesenzähne mit der ersten CAM-Vorrichtung oder einer zweiten CAM-Vorrichtung nach Maßgabe der Daten zur Unterseite des virtuellen dreidimensionalen Modells der Prothesenbasis, wobei die vorkonfektionierten Prothesenzähne stärker gekürzt werden, als es die Daten zur Unterseite des virtuellen dreidimensionalen Modells der Prothesenbasis vorgeben,
G) Subtraktives Bearbeiten der Unterseite des bearbeiteten Rohlings mit der ersten CAM-Vorrichtung oder der zweiten CAM-Vorrichtung oder einer dritten CAM-Vorrichtung entsprechend den Daten der Unterseite des virtuellen dreidimensionalen Modells der Prothesenbasis.

Die Oberseite der Prothesenbasis und damit des virtuellen dreidimensionalen Modells der Prothesenbasis ist die Seite, die der zur Auflage auf dem zahnlosen Kiefer beziehungsweise dem Zahnfleisch vorgesehenen Unterseite gegenüberliegt. Die Richtungsbezeichnungen lassen sich auch auf den Rohling anwenden, sobald er zumindest bereichsweise bearbeitet ist. Für die virtuellen dreidimensionalen Modelle werden die gleichen Richtungsbezeichnungen entsprechend analog angewendet.

Bevorzugt kann erfindungsgemäß vorgesehen sein, dass alle subtraktiven Bearbeitungen mit der ersten CAM-Vorrichtung durchgeführt werden, vorzugsweise alle subtraktiven Bearbeitungen und das Kürzen der basalen Seiten der vorkonfektionierten Prothesenzähne mit der ersten CAM-Vorrichtung durchgeführt werden.

Es kann vorgesehen sein, dass das virtuelle dreidimensionale Dentalprothesen-Modell in Schritt A) rechnerisch mittels File-Splitting in das virtuelle dreidimensionale Modell der Prothesenzähne und das virtuelle dreidimensionale Modell der Prothesenbasis getrennt wird.

Dass in Schritt D) die Zahnfächer derart tief ausgeführt werden, so dass jeder unbearbeitete vorkonfektionierte Prothesenzahn derart in das jeweilige Zahnfach einsetzbar ist, dass die Okklusionsebene der eingesetzten vorkonfektionierten Prothesenzähne der Okklusionsebene des virtuellen dreidimensionalen Dentalprothesen-Modells entspricht, kann auch dadurch erreicht werden, dass in dem von der Oberseite bearbeiteten Rohling durchgehende Ausnehmungen erzeugt werden, die bis zur Unterseite des Rohlings reichen, so dass die Wurzeln, also die basalen Seiten der unbearbeiteten vorkonfektionierten Prothesenzähne an der Unterseite des Rohlings heraustreten oder zu sehen sind, wenn sie in Schritt E) in die Zahnfächer des von der Oberseite bearbeiteten Rohlings eingesetzt sind. Damit die Prothesenzähne auch dann noch in der gewünschten Okklusionsebene liegen, müssen die Wurzeln der vorkonfektionierten Prothesenzähne konisch geformt sein oder es müssen an den vorkonfektionierten Prothesenzähnen geeignete Absätze oder Vorsprünge vorgesehen sein, damit die vorkonfektionierten Prothesenzähne nicht durch die durchgehenden Zahnfächer nach unten rutschen können.

Die vorkonfektionierten Prothesenzähne bestehen nicht aus Wachs oder aus einem wachsartigen Kunststoff, sondern aus einem harten Material, vorzugsweise aus einem harten Kunststoff oder aus einer Keramik, besonders bevorzugt aus einem polymerisierten Polymethylmethacrylat. In dem Kunststoff können Keramikpartikel enthalten sein.

Es kann erfindungsgemäß vorgesehen sein, dass die erste CAM-Vorrichtung oder die zweite CAM-Vorrichtung oder die dritte CAM-Vorrichtung eine computergesteuerte Fräse ist, insbesondere eine Fräse mit mindestens 5 Achsen, oder die erste und die zweite und gegebenenfalls die dritte CAM-Vorrichtung computergesteuerte Fräsen sind, insbesondere mindestens 5-Achs-Fräsen, wobei das subtraktive Bearbeiten des Rohlings in Schritt C) und in Schritt G) sowie das Kürzen der basalen Seiten der vorkonfektionierten Prothesenzähne in Schritt F) durch Fräsen erfolgen.

Computergesteuerte Fräsen und mindestens 5-Achs-Fräsen sind besonders gut zur Umsetzung des erfindungsgemäßen Verfahrens geeignet. Zudem lassen sich damit die Bearbeitungsschritte auf einfache Weise relativ kostengünstig umsetzen. Ferner sind derartige Fräsen auch bereits in vielen Dentallabors vorhanden und dadurch einsetzbar. Alternativ könnte auch ein Laser oder eine computergesteuerte Schneidvorrichtung zum subtraktiven Bearbeiten und Kürzen verwendet werden.

Dabei kann vorgesehen sein, dass zumindest die erste die computergesteuerte Fräse einen Anstellwinkel von mehr als 25° aufweist, insbesondere einen Anstellwinkel von zumindest 30°, wobei vorzugsweise alle verwendeten computergesteuerten Fräsen einen Anstellwinkel von mehr als 25° aufweisen, insbesondere einen Anstellwinkel von zumindest 30°.

Hierdurch kann der Rohling und bevorzugt auch die basalen Enden der Prothesenzähne besonders effizient, schnell und präzise bearbeitet werden.

Ferner kann vorgesehen sein, dass in Schritt E) die unbearbeiteten vorkonfektionierten Prothesenzähne durch Verkleben in den jeweiligen Zahnfächern befestigt werden, vorzugsweise durch Verkleben mit dem Wachs oder mit dem wachsartigen Kunststoff, aus dem der Rohling besteht.

Dadurch können die unbearbeiteten vorkonfektionierten Prothesenzähne stabil mit dem von der Oberseite aus bearbeiteten Rohling verbunden werden, so dass sich die Positionen der eingeklebten Prothesenzähne in dem Rohling nicht aufgrund einer mechanischen Belastung beim Kürzen der Prothesenzähne in Schritt F) oder aufgrund der subtraktiven Bearbeitung der Unterseite des Rohlings in Schritt G) ändern.

Es kann erfindungsgemäß auch vorgesehen sein, dass die Zahnfächer derart geformt ausgeführt werden, dass die vorkonfektionierten Prothesenzähne in den jeweiligen Zahnfächern flächenbündig anliegen, wobei bevorzugt die vorkonfektionierten Prothesenzähne in den jeweiligen Zahnfächern an einem Umfang der Prothesenzähne, insbesondere am Zahnhals der Prothesenzähne oder zervikal, flächenbündig anliegen.

Der Zahnhals eines vorkonfektionierten Prothesenzahns ist der Teil des Prothesenzahns, der bei einer Dentalprothese innerhalb der Zahnfächer der Prothesenbasis angeordnet wird.

Hierdurch wird erreicht, dass die eingesetzten vorkonfektionierten Prothesenzähne mechanisch stabil in den Zahnfächern gehalten werden. Dies erleichtert deren nachfolgende Bearbeitung.

Es kann auch vorgesehen sein, dass beim basalen Kürzen der basalen Seiten der in dem bearbeiteten Rohling befestigten vorkonfektionierten Prothesenzähne in Schritt F) auch der bearbeitete Rohling an dessen Unterseite bereichsweise stärker subtraktiv bearbeitet wird, als es die Daten zur Unterseite des virtuellen dreidimensionalen Modells der Prothesenbasis vorgeben, wobei vorzugsweise die Bereiche an der Unterseite des bearbeiteten Rohlings, die an die befestigten vorkonfektionierten Prothesenzähne angrenzen, stärker subtraktiv bearbeitet werden, als es die Daten zur Unterseite des virtuellen dreidimensionalen Modells der Prothesenbasis vorgeben.

Hiermit soll sichergestellt werden, dass die Prothesenzähne basal vollständig stärker gekürzt werden können, als es durch das dreidimensionale virtuelle Modell der Prothesenbasis vorgegeben wird, auch wenn dazu CAM-Vorrichtungen mit Werkzeugen verwendet werden, die eine scharfe Kante nicht ermöglichen. Zudem kann so eine Erleichterung eines nachfolgenden Schritts erreicht werden, bei dem die fertige Prothesenbasis der Wachsprothese von der Unterseite her mit dem Wachs oder dem wachsartigen Kunststoff oder einem anderen geeigneten Material zugeschmiert beziehungsweise verschlossen wird. So kann das verwendete Material beispielsweise einfach mit einem Finger entlang des Zahnbogens in die Unterseite der Prothesenbasis eingeschmiert und eingedrückt werden, so dass die von der Unterseite aus zugänglichen Zahnfächer verschlossen werden und die basalen Seiten der Prothesenzähne mit dem Material abgedeckt werden.

Ferner kann vorgesehen sein, dass die Schritte C) und D) und/oder die Schritte F) und G) in einem gemeinsamen Arbeitsschritt erfolgen.

Hierdurch kann das Verfahren vereinfacht und zeitlich gekürzt werden.

Des Weiteren kann vorgesehen sein, dass die Schritte C) und D) chronologisch nach den Schritten A) und B) erfolgen, der Schritt E) chronologisch nach den Schritten C) und D) erfolgt und die Schritte F) und G) chronologisch nach Schritt E) erfolgen.

Dies vereinfacht die Durchführung des Verfahrens und stellt eine sinnvolle Abfolge der Verfahrensschritte sicher.

Gemäß einer bevorzugten Weiterbildung der vorliegenden Erfindung kann vorgesehen sein, ein Erfassen von Oberflächendaten des Kiefers des zahnlosen oder teilweise zahnlosen Patienten durch intraoralen 3D-Scan, durch Abformung des Kiefers und 3D-Scan der Abformung oder durch Abformung, Herstellung eines Modells der Abformung und 3D-Scan des Modells vor Schritt A).

Hiermit wird das Verfahren auf die Erfassung der zur Umsetzung des Verfahrens notwendigen Daten ausgedehnt und dadurch das Verfahren weiter komplettiert und automatisierbar. Die Tatsache, dass das erfindungsgemäße Verfahren weitgehend automatisiert durchführbar ist, ermöglicht auch besondere Vorteile bei einer weiterführenden Automatisierung des Verfahrens bei der Datenerfassung. Somit ergibt sich aus der Automatisierung der Datenerfassung ein besonderer kombinatorischer Effekt in der Zusammenwirkung mit dem ohnehin schon weitgehend automatisierten Verfahren.

Ferner kann ein Erzeugen des virtuellen dreidimensionalen Dentalprothesen-Modells oder des virtuellen dreidimensionalen Modells der Prothesenbasis durch ein CAD-Verfahren vorgesehen sein, wobei hierzu CAD-Daten zur äußeren Form der vorkonfektionierten Prothesenzähne verwendet werden und/oder die Oberflächendaten des Kiefers verwendet werden.

Hierdurch wird auch die Bestimmung Form der Prothesenbasis der zu erzeugenden Wachsprothese durch Berechnung automatisiert. Das Verfahren ist dadurch schnell, kostengünstig und in reproduzierbarer Qualität umsetzbar und nutzt dabei eine ohnehin notwendige vorhandene Rechenleistung eines Computers.

Dabei kann vorgesehen sein, dass die Zahnfächer in Schritt D) mit Positionierhilfen geformt werden, so dass die Form jedes Zahnfachs den jeweilig einzusetzenden vorkonfektionierten Prothesenzahn vorgibt, vorzugsweise die Form jedes Zahnfachs nur zu dem jeweilig einzusetzenden vorkonfektionierten Prothesenzahn passt.

Hierdurch kann vermieden werden, dass die Prothesenzähne in die falschen Zahnfächer eingesetzt werden. Hierdurch wird die Möglichkeit von Fehlern bei der Herstellung der Wachsprothese reduziert.

Ferner kann vorgesehen sein, dass in Schritt F) oder G) zumindest zwei der Zahnfächer zu durchgehenden Löcher in der Prothesenbasis umgeformt werden, durch die die basalen Seiten zumindest zweier der bearbeiteten Prothesenzähne von der Unterseite der Prothesenbasis zugänglich sind.

Hierdurch wird erreicht, dass zumindest zwei der Zahnfächer nach Schritt D) zunächst noch keine durchgehenden Löcher waren. Dadurch können die Zahnfächer den Prothesenzahn vor Schritt F) und G) noch besser stabilisieren und es ist leichter, die gewünschte Okklusionsebene einzustellen.

Des Weiteren können sich erfindungsgemäße Verfahren auszeichnen durch ein Auftragen eines Wachses oder eines bei unter 80°C manuell formbaren, wachsartigen Kunststoffs auf die Unterseite der Prothesenbasis, so dass alle bis zur Unterseite der Prothesenbasis reichenden Zahnfächer, an der Unterseite verschlossen werden.

Die bis zur Unterseite der Prothesenbasis reichenden Zahnfächer sind als durchgehende Löcher ausgeformt. Durch das Auftragen des Wachses oder des bei unter 80°C manuell formbaren, wachsartigen Kunststoffs kann die so erzeugte Wachsprothese direkt durch Abformen der Wachsprothese und durch Ausbrühen oder Ausschmelzen der Prothesenbasis und durch Auffüllen einer Küvette mit Kunststoff zur Herstellung einer endgültigen Dentalprothese verwendet werden.

Es kann vorgesehen sein, dass in Schritt F) die basalen Seiten der in dem bearbeiteten Rohling befestigten vorkonfektionierten Prothesenzähne um zumindest 0,01 mm stärker gekürzt werden, als es die Daten zur Unterseite des virtuellen dreidimensionalen Modells der Prothesenbasis vorgeben, bevorzugt um 0,05 mm bis 1 mm stärker gekürzt werden, besonders bevorzugt um 0,1 mm bis 0,5 mm stärker gekürzt werden, als es die Daten zur Unterseite des virtuellen dreidimensionalen Modells der Prothesenbasis vorgeben.

Hierdurch wird bei der späteren Herstellung der Prothesenbasis mit Hilfe der Wachsprothese ein Klebespalt zur Verbindung der basal gekürzten Prothesenzähne mit der Prothesenbasis der Dentalprothesen bereitgestellt. Ferner sind die Prothesenzähne in der Prothesenbasis der Dentalprothese nicht an deren Unterseite sichtbar.

Es kann ferner vorgesehen sein, dass die Stellung wenigstens eines der Prothesenzähne in der fertigen Wachsprothese verändert wird.

Hierdurch wird die Wachsprothese zur manuellen Korrektur der Lage und Position der Prothesenzähne tatsächlich verwendet, bevor sie zur Herstellung einer endgültigen Dentalprothese verwendet wird. Dazu kann die fertige Wachsprothese beim Patienten eingesetzt werden.

Es kann auch vorgesehen sein, dass die Lage und/oder die Orientierung der virtuellen Prothesenzähne im virtuellen dreidimensionalen Dentalprothesen-Modell durch eine Simulation der Lage der Dentalprothese im Mundraum des Patienten ausgewählt wird und/oder durch eine Simulation der Lage und Orientierung der Prothesenzähne zueinander und/oder zur Prothesenbasis ausgewählt wird, wobei bevorzugt zusätzlich die Okklusionsebene und/oder die Kaubewegungen des Kiefers simuliert werden.

Hierdurch wird das Verfahren weiter automatisiert und die Herstellung standardisiert. Als Ergebnis kann eine bereits besonders gut angepasste Wachsprothese erzeugt werden, so dass nur geringe Korrekturen an der Wachsprothese durchgeführt werden müssen. Dadurch kann die Wachsprothese mit geringeren Toleranzen gefertigt werden.

Es kann vorgesehen sein, dass in Schritt D) die Zahnfächer derart tief ausgeführt werden und derart ausgeformt werden, so dass jeder unbearbeitete vorkonfektionierte Prothesenzahn derart in das jeweilige Zahnfach einsetzbar ist, dass die Okklusionsflächen der eingesetzten vorkonfektionierten Prothesenzähne den Okklusionsflächen des virtuellen dreidimensionalen Dentalprothesen-Modells entsprechen.

Dadurch entspricht die hergestellte Wachsprothese in ihrer äußeren Form sehr genau dem verwendeten dreidimensionalen virtuellen Modell der Dentalprothese.

Es kann erfindungsgemäß auch vorgesehen sein, dass das Wachs oder der bei unter 80°C manuell formbare, wachsartige Kunststoff einen Tropfpunkt zwischen 50°C und 150°C aufweist, bevorzugt einen Tropfpunkt zwischen 85°C und 115°C.

Dadurch kann das Wachs oder der wachsartige Kunststoff später gut aus der Form gegossen werden und ist daher zur Umsetzung des Verfahrens gut geeignet. Der Tropfpunkt bezeichnet die Temperatur, bei der ein Stoff unter genormten Prüfbedingungen zu fließen beginnt. Dabei wird der Stoff so lange kontrolliert erhitzt, bis er vom festen in den flüssigen Aggregatzustand übergeht. Hierzu ist der Stoff mit einem genormten Nippel ausgeformt. Während der Messung wird die Temperatur erfasst, bei der sich der erste Tropfen aus der Stoffprobe löst. Der Tropfpunkt kennzeichnet dabei die Schmelzbarkeit des Waches oder des wachsartigen Kunststoffs. Der Tropfpunkt ist zum Zeitpunkt der vorliegenden Patentanmeldung nach DIN ISO 2176:1997-05, Ausgabedatum Mai 1997, wie sie am Anmeldetag Gültigkeit hatte, geregelt.

Die der vorliegenden Erfindung zugrundeliegenden Aufgaben werden auch gelöst durch ein Verfahren zur Herstellung einer Dentalprothese unter Verwendung einer Wachsprothese, wobei die Wachsprothese mit einem erfindungsgemäßen Verfahren hergestellt wird, gekennzeichnet durch die weiteren chronologisch nachfolgenden Schritte
H) Einbetten der Wachsprothese mit den darin befestigten basal bearbeiteten Prothesenzähnen in ein Einbettmaterial zur Herstellung einer Küvette,
I) Ausbrühen oder Ausschmelzen der Prothesenbasis der eingebetteten Wachsprothese, so dass die Küvette entsteht, in der die Prothesenzähne enthalten sind, und
J) Einfüllen eines Kunststoffs in die Küvette, Aushärten des eingefüllten Kunststoffs und Entformen der so erzeugten Dentalprothese aus der Küvette.

Nach dem Entformen der Dentalprothese kann diese entgratet und geglättet werden.

Durch dieses Verfahren wird eine fertige Dentalprothese hergestellt und die Vorteile des erfindungsgemäßen Verfahrens zur Herstellung der Wachsprothese auf ein Verfahren zur Herstellung einer Dentalprothese übertragen. Durch dieses Verfahren wird zudem ein Verfahren zur Herstellung einer Dentalprothese durch Abformen, Ausbrühen oder Ausschmelzen und Ausgießen der Küvette mit den Prothesenzähnen darin angewendet, bei dem gleichzeitig die Vorteile moderner CAD/CAM-Verfahren bei der Fertigung einsetzbar sind.

Die Küvette ist eine Hohlform und kann beispielsweise aus Gips oder Silikon oder Gel gefertigt werden.

Die der vorliegenden Erfindung zugrundeliegenden Aufgaben werden auch gelöst durch ein Verfahren zur Herstellung einer Dentalprothese unter Verwendung einer Wachsprothese, wobei die Wachsprothese mit einem erfindungsgemäßen Verfahren hergestellt wird, gekennzeichnet durch die weiteren chronologisch nachfolgenden Schritte
H2) 3D-Einscannen der Wachsprothese mit den darin befestigten basal bearbeiteten Prothesenzähnen,
I2) Erzeugen eines CAD-Modells einer Prothesenbasis der herzustellenden Dentalprothese auf Basis des 3D-Scans nach Schritt H2), wobei vorzugsweise das CAD-Modell zusätzlich auf Basis der Daten des virtuellen dreidimensionalen Modells der Prothesenbasis für die Wachsaufstellung zur Berechnung der Unterseite des CAD-Modells der Prothesenbasis der herzustellenden Dentalprothese erzeugt wird,
J2) Herstellen der Prothesenbasis der herzustellenden Dentalprothese aus Kunststoff mit einem CAM-Verfahren auf Basis des CAD-Modells, und
K2) Entfernen der Prothesenzähne aus der Wachsprothese, wobei vorzugsweise Wachsreste von den Prothesenzähnen entfernt werden, und nachfolgend Einsetzen und Einkleben der Prothesenzähne in die Prothesenbasis der herzustellenden Dentalprothese.

Als CAM-Verfahren zur Herstellung der Prothesenbasis der herzustellenden Dentalprothese kann vorzugsweise ein computergesteuertes Fräsverfahren, ein Rapid-Prototyping-Verfahren oder ein 3D-Druckverfahren verwendet werden.

Durch dieses Verfahren wird eine fertige Dentalprothese hergestellt und die Vorteile des erfindungsgemäßen Verfahrens zur Herstellung der Wachsprothese auf ein Verfahren zur Herstellung einer Dentalprothese übertragen. Das Abscannen der gegebenenfalls korrigierten Wachsprothese ermöglicht eine sehr weitgehend automatisierte Fertigung, bei der dennoch die Möglichkeit besteht, mit der Wachsprothese als Zwischenprodukt eine individuelle Anpassung vorzusehen.

Die vorliegende Patentanmeldung offenbart auch eine Vorrichtung zur Herstellung einer Wachsprothese, wobei die Wachsprothese eine Prothesenbasis und mehrere basal bearbeitete vorkonfektionierte Prothesenzähne aufweist, die Vorrichtung aufweisend eine Steuerung, insbesondere einen Computer mit einem Computerprogramm, wobei die Steuerung zum Durchführen zumindest des Schritts A) nach einem der oben genannten erfindungsgemäßen Verfahren geeignet und/oder vorgesehen ist, und zumindest eine CAM-Vorrichtung, insbesondere zumindest eine computergesteuerte Fräse mit mindestens 5 Achsen, wobei die zumindest eine CAM-Vorrichtung mit der Steuerung zumindest zur Durchführung zumindest der Schritte C), D), F) und G) nach einem der oben genannten erfindungsgemäßen Verfahren steuerbar ist.

Die Vorrichtung bietet die erfindungsgemäßen Vorteile der Verfahren. Durch die entsprechend programmierte oder ausgestaltete Steuerung kann eine Wachsprothese weitgehend automatisiert hergestellt werden, wobei moderne Herstellungsverfahren zum Einsatz kommen, gleichzeitig aber eine manuelle Korrektur der Stellung der Prothesenzähne möglich ist. Gleichzeitig sind die basal bearbeiteten vorkonfektionierten Prothesenzähne basal vollständig in die Prothesenbasis der Wachsprothese eingebettet. Dadurch ist es leichter möglich, auch die endgültige Dentalprothese so auszuführen, dass die basal bearbeiteten vorkonfektionierten Prothesenzähne basal vollständig in der Prothesenbasis der Dentalprothese eingebettet sind und dort gestützt werden.

Dabei kann vorgesehen sein, dass ein Speicher zur Speicherung der Daten der virtuellen dreidimensionalen Modelle der Prothesenzähne und der Prothesenbasis, auf den die Steuerung Zugriff hat und/oder eine Datenerfassungseinrichtung zum Einlesen von 3D-Daten, insbesondere einen 3D-Scanner zum Einscannen von 3D-Daten, insbesondere zur Erfassung von Oberflächendaten des Kiefers des zahnlosen oder teilweise zahnlosen Patienten durch intraoralen 3D-Scan, durch Abformung des Kiefers und 3D-Scan der Abformung oder durch Abformung, Herstellung eines Modells der Abformung und 3D-Scan des Modells (insbesondere vor Schritt A)), wobei die Datenerfassungseinrichtung mit der Steuerung verbunden ist, wobei mit der Steuerung aus den eingelesenen 3D-Daten die virtuellen dreidimensionalen Modelle berechenbar sind.

Hierdurch kann die Vorrichtung noch weitere der erfindungsgemäß vorgesehenen Verfahrensschritte umsetzen.

Es kann auch vorgesehen sein, dass die Vorrichtung zur Herstellung einer Dentalprothese einen 3D-Scanner zum Einscannen der Wachsprothese in Schritt H2) umfasst, wobei der 3D-Scanner mit der Steuerung verbunden ist, und wobei eine CAM-Vorrichtung der zumindest einen CAM-Vorrichtung mit der Steuerung zum Herstellen der Prothesenbasis der herzustellenden Dentalprothese aus Kunststoff nach Schritt J2) steuerbar ist.

Hierdurch wird die Vorrichtung zum Herstellen der Wachsprothese zu einer Vorrichtung zur Herstellung einer endgültigen Dentalprothese erweitert.

Des Weiteren kann vorgesehen sein, dass die Vorrichtung zumindest eines der folgenden Module umfasst:
ein Dentalprothesenberechnungsmodul zur Berechnung eines virtuellen dreidimensionalen Dentalprothesen-Modells aus den Daten der Mundraumsituation eines Patienten oder eines Modells der Mundraumsituation des Patienten,
ein File-Splitting-Modul zur rechnerischen Trennung des virtuellen dreidimensionalen Dentalprothesen-Modells in ein virtuelles dreidimensionales Modell der Prothesenbasis und ein virtuelles dreidimensionales Modell der Prothesenzähne,
ein Zahnfach-Modul zur Berechnung der Zahnfächer in der Prothesenbasis, wobei das Zahnfach-Modul hierzu Daten zur äußeren Form der unbearbeiteten vorkonfektionierten Prothesenzähne verwendet, insbesondere dreidimensionale virtuelle Modelle der unbearbeiteten vorkonfektionierten Prothesenzähne,
ein Kürzungs-Modul zur Berechnung einer übermäßigen basalen Kürzung der vorkonfektionierten Prothesenzähne im Vergleich zu den Daten des virtuellen dreidimensionalen Modells der Unterseite der Prothesenbasis.

Mit diesen Modulen lassen sich die erfindungsgemäßen Verfahren besonders leicht umsetzen.

Die der vorliegenden Erfindung zugrundeliegenden Aufgaben werden auch gelöst durch eine Wachsprothese hergestellt mit einem erfindungsgemäßen Verfahren. Es wird auch eine Dentalprothese offenbart, die mit einem erfindungsgemäßen Verfahren hergestellt wird.

Die erfindungsgemäße Wachsprothese und die Dentalprothese weisen die Vorteile auf, die das erfindungsgemäße Verfahren hat.

Hiermit wird sichergestellt, dass die Vorrichtung die notwendigen Bauteile zur vollständigen Umsetzung des erfindungsgemäßen Verfahrens aufweist und diese in besonders gut geeigneter Weise zusammenwirken können.

Das Dentalprothesenberechnungsmodul ist dabei bevorzugt zur Berechnung eines virtuellen dreidimensionalen Modells einer Dentalprothese aus den Daten der Mundraumsituation eines Patienten und aus den dreidimensionalen Formdaten unterschiedlicher Sätze vorkonfektionierter Prothesenzähne ausgelegt.

Die Module sind vorzugsweise für ihre Funktion geeignet programmiert.

Der Erfindung liegt die überraschende Erkenntnis zugrunde, dass es durch die Herstellung einer Wachsprothese mit einem CAM-Verfahren auf Basis eines virtuellen dreidimensionalen Modells einer Dentalprothese und übermäßigem basalen Kürzen der Prothesenbasis der Wachsprothese gelingt, einerseits eine manuelle Korrektur der Aufstellung der Prothesenzähne zu ermöglichen und gleichzeitig eine Verankerung der gekürzten Prothesenzähne auf der basalen Seite durch die Prothesenbasis der endgültigen Dentalprothese zu erreichen. Das erfindungsgemäße Verfahren und die Vorrichtung haben dabei den zusätzlichen Vorteil, dass bekannte Verfahren wie das Ausgießen einer Küvette zusammen mit modernen CAD/CAM-Verfahren angewendet werden können oder auch eine noch weitergehende Nutzung digitaler Fertigungstechniken nach Erstellung der Wachsprothese möglich sind. Ferner kann so erreicht werden, dass die Lage und Position der Prothesenzähne bei der Bearbeitung der Lage und Position bei der fertigen Wachsprothese entspricht.

Beispielsweise kann ein erfindungsgemäßes Verfahren zur Herstellung einer Wachsprothese oder einer Dentalprothese (also einer dentalen Teil- oder Vollprothese), mit den folgenden Schritten umgesetzt werden:
1. Erfassen der Oberflächendaten des Kiefers des zahnlosen oder teilweise zahnlosen Patienten durch intraoralen 3D-Scan, oder durch Abformung und 3D-Scan der Abformung, oder durch Abformung, Herstellung eines Modells der Abformung und 3D-Scan des Modells;
2. CAD-Design der Dentalprothese unter Verwendung der CAD-Daten vorkonfektionierter Prothesenzähne;
3. Bereitstellung eines Wachsrohlings;
4. Fräsen der Oberseite der Wachsprothesenbasis im Wachsrohling auf Basis der CAD-Daten mit Zahnfächern als Positionierhilfen für die später einzusetzenden konfektionierten Zähne, wobei diese Zahnfächer so "tief" gefräst werden, dass die Prothesenzähne so weit in diese eintauchen, dass die Okklusionsseite der einzelnen Prothesenzähne nach dem Einsetzen der Prothesenzähne in die Wachsprothesenbasis bereits in der richtigen Höhe (z) liegt; Dabei kann es vorkommen, dass die Zahnfächer die fertiggestellte Wachsprothesenbasis vollständig durchdringen, also quasi "Löcher" als Zahnfächer in der Wachsprothesenbasis vorliegen.
5. Einsetzen der vorkonfektionierten Prothesenzähne in die Oberseite der Wachsprothesenbasis und Verkleben der Prothesenzähne mit der Wachsprothesenbasis mit Wachs;
6. Umdrehen des Wachsrohlings in der Fräsmaschine (automatisiert oder manuell) und basales Kürzen der in der Wachsprothesenbasis eingesetzten vorkonfektionierten Prothesenzähne, wobei die Prothesenzähne "untermäßig" gekürzt werden, das heißt ein wenig mehr, vorzugsweise 0,1 mm bis 0,5 mm mehr, gekürzt werden, als es für eine glatte Oberfläche der basalen Seite notwendig wäre, damit ein Klebespalt entsteht und/oder damit später in der finalen Prothesenbasis aus Kunststoff die basale Seite der Prothesenzähne nicht sichtbar wird;
7. Fräsen der basalen Seite der Wachsprothesenbasis, wobei die Schritte 6. und 7. auch gleichzeitig durchgeführt werden können;
8. Optional Korrekturen bezüglich der Lage der einzelnen Prothesenzähne durchführen.

Die Wachsprothese ist nach Schritt 7. oder 8. fertiggestellt. Ab hier gibt es zwei Optionen, wie aus der Wachsprothese eine endgültige Dentalprothese gefertigt werden kann.

Erstens: ein manueller Prozess mit den Schritten:
9. Einbetten der Wachsprothese mit den konfektionierten Zähnen (Ausformen der Küvette);
10. Ausbrühen der Wachsbasis (Fertigstellen der Küvette);
11. Einfüllen, Aushärten und Entformen eines Prothesenbasis-Kunststoffs unter Herstellung der endgültigen Prothese (Verwenden der Küvette als Hohlform zur Herstellung der Dentalprothese).

Zweitens: alternativ ein automatisierter Prozess mit den Schritten:
9. Einscannen der Wachsprothese mit einem 3D-Scanner;
10. Generieren eines CAD-Modells der Prothesenbasis auf Basis der Scandaten der Wachsprothese und der CAD-Daten der (gekürzten) vorkonfektionierten Prothesenzähne;
11. CAM-Herstellung einer endgültigen Prothesenbasis (RP oder Fräsen) aus Prothesenkunststoff;
12. Herausnahme der gekürzten vorkonfektionierten Prothesenzähne aus der Wachsbasis, Reinigen der Prothesenzähne und Einkleben in die endgültige Prothesenbasis zu Herstellung der endgültigen Dentalprothese.

Im Folgenden werden weitere Ausführungsbeispiele der Erfindung anhand von acht schematisch dargestellten Figuren erläutert, ohne jedoch dabei die Erfindung zu beschränken. Dabei zeigt:
Figur 1: eine schematische Querschnittansicht eines Satzes vorkonfektionierter Prothesenzähne nach dem Stand der Technik;
Figur 2: den Ablauf eines ersten Teils eines beispielhaften erfindungsgemäßen Verfahrens als insgesamt drei übereinander angeordnete schematische Querschnittansichten mit den Figuren 2 A) bis C);
Figur 3: den Ablauf eines zweiten Teils des beispielhaften erfindungsgemäßen Verfahrens nach Figur 2 als insgesamt drei übereinander angeordnete schematische Querschnittansichten mit den Figuren 3 A) bis C);
Figur 4: zwei übereinander angeordnete schematische Querschnittansichten als Figuren 4 A) und 4 B) zur Verdeutlichung von nachgelagerten Verfahrensschritten zur automatisierten Herstellung einer Dentalprothese;
Figuren 5 bis 7: den Ablauf eines alternativen nachgelagerten Verfahrens zur manuellen Herstellung einer Dentalprothese als insgesamt sechs schematische Querschnittansichten mit den Figuren 5 A), 5 B), 6 A), 6 B), 7 A) und 7 B); und
Figur 8: eine schematische Darstellung einer Vorrichtung zur Umsetzung eines erfindungsgemäßen Verfahrens.

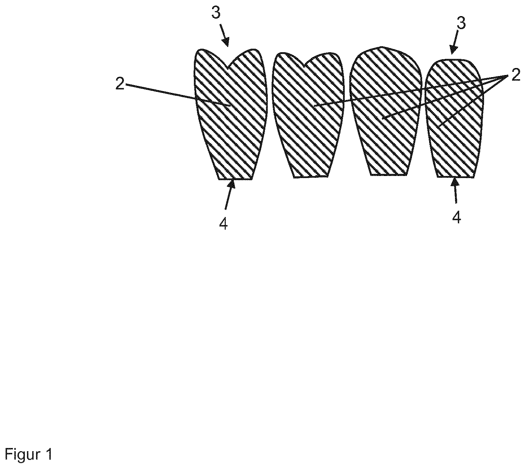

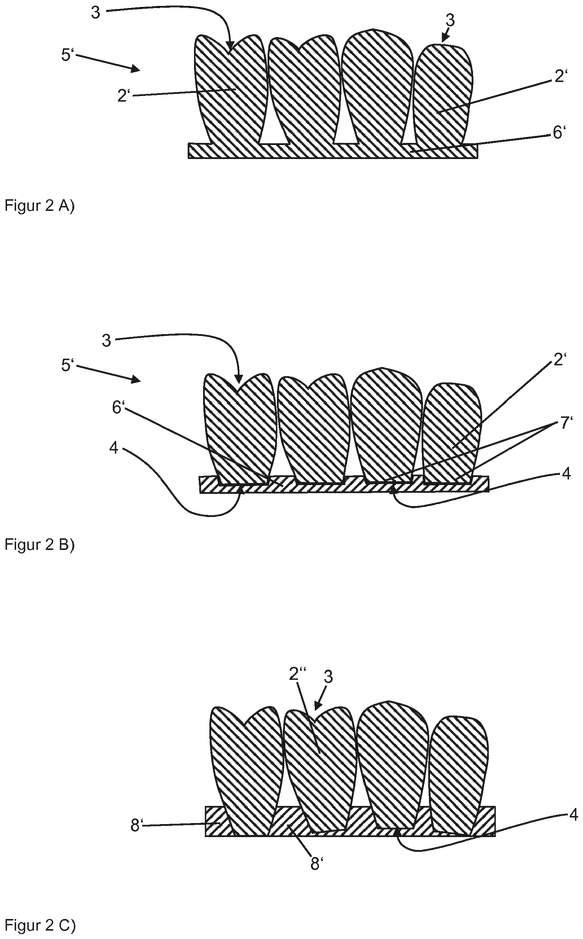

In den Figuren werden teilweise auch für unterschiedliche Ausführungen der Übersichtlichkeit wegen die gleichen Bezugszeichen auch für unterschiedliche aber gleichartige Teile verwendet, wie beispielsweise für die Prothesenzähne, die in der gesamten folgenden Figurenbeschreibung und in allen Figuren mit dem Bezugszeichen 2 gekennzeichnet sind. Ferner werden teilweise die Bezugszeichen sowohl für die physischen Teile nach den Figuren 1 und 3 bis 7 als auch für die virtuellen Modelle nach den Figuren 2 A), 2 B) und 2 C) verwendet, die zur Bearbeitung oder Herstellung der physischen Teile angewendet werden. Hierdurch soll für den Leser die Zuordnung der virtuellen Modelle zu den physischen Teilen klarer erkennbar sein. Um den Unterschied zu verdeutlichen, werden virtuelle Modelle der Teile mit einem Strich oder mit zwei Strichen oben rechts hinter dem Bezugszeichen gekennzeichnet. Bei Richtungsbezeichnungen wird nicht zwischen virtuellem Modell und physischem Teil unterschieden.

Figur 1 zeigt einen Satz vorkonfektionierter Prothesenzähne 2 gemäß dem Stand der Technik in einer schematischen Querschnittansicht. Die Prothesenzähne 2 sind zum Umsetzen eines erfindungsgemäßen Verfahrens und zur Herstellung einer erfindungsgemäßen Dentalprothese geeignet. Die Prothesenzähne 2 weisen eine koronale Seite 3 auf, die später die Okklusionsflächen der fertigen Wachsprothese und der fertigen Dentalprothese bilden und die dabei die Okklusionsebene der Wachsprothese und gegebenenfalls auch der Dentalprothese definieren. Die der koronalen Seite 3 gegenüberliegende basale Seite 4 der Prothesenzähne 2 dient der Verbindung mit einer Prothesenbasis (in Figur 1 nicht zu sehen). Da die Prothesenzähne 2 vorkonfektioniert sind, ist deren Form und äußere Abmessung bekannt. Vorzugsweise liegen hierzu Datensätze als virtuelle Modelle 2" der Prothesenzähne 2 (siehe Figur 2 C)) vor, beziehungsweise eine Datenbank mit den virtuellen Modellen einer Vielzahl unterschiedlicher Sätze von Prothesenzähnen, aus denen die passenden ausgewählt werden können.

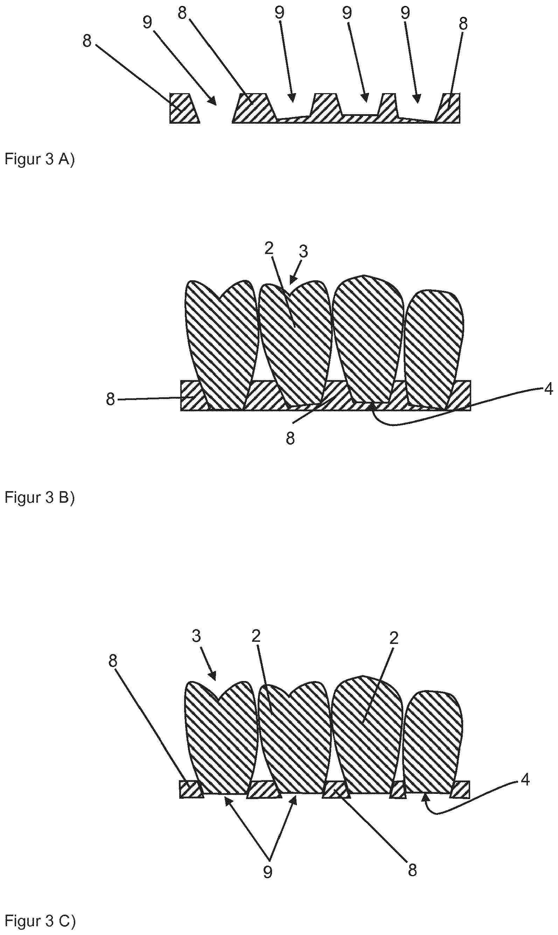

Die Figuren 2 und 3 zeigen den Ablauf eines beispielhaften erfindungsgemäßen Verfahrens zur Herstellung einer Wachsprothese in sechs Schritten als jeweils drei übereinander angeordnete schematische Querschnittansichten. Die virtuellen dreidimensionalen Modelle 2" der Prothesenzähne 2 können zur Berechnung eines virtuellen dreidimensionalen Dentalprothesen-Modells 5' verwendet werden (siehe Figur 2 A)). Alternativ ist es auch möglich, die vorkonfektionierten Prothesenzähne 2 einzuscannen und so virtuelle dreidimensionale Modelle 2" der Prothesenzähne 2 zu erhalten. Um das virtuelle dreidimensionale Dentalprothesen-Modell 5` zu erhalten, wird ein Modell des Mundraums eines Patienten erzeugt und dadurch die Auflagefläche für ein dreidimensionales virtuelles Modell einer Prothesenbasis 6` der Dentalprothese 5' berechnet.

Zu Beginn des Verfahrens (Figur 2 A)) können zudem mehrere vorkonfektionierte Prothesenzähne 2 ausgewählt und bereitgestellt werden. Geeignete Prothesenzähne 2 werden dabei anhand eines rechnerischen Verfahrens und/oder durch den Anwender ausgewählt. Zunächst wird mit einem CAD-Verfahren anhand des Modells der Mundraumsituation des Patienten (in den Figuren 1 bis 7 nicht gezeigt) das virtuelle dreidimensionale Dentalprothesen-Modell 5' erzeugt. Dabei bestimmt die Form der Mukosa, also des Zahnfleischs des zahnlosen Kiefers des Patienten, die Form der Auflagefläche des virtuellen dreidimensionalen Dentalprothesen-Modells 5' und passende Prothesenzähne 2 werden aus den bekannten dreidimensionalen Formen einer Vielzahl von zuvor registrierten vorkonfektionierten Prothesenzähnen 2 ausgewählt. Dadurch bestimmen die ausgewählten Prothesenzähne 2 die virtuelle Form der Prothesenzähne 2' in dem virtuellen Dentalprothesen-Modell 5`.

Auch die virtuellen Modelle 2' der Prothesenzähne 2 haben eine koronale Seite 3 und eine basale Seite 4. Die koronalen Seiten 3 bilden später die Okklusionsflächen der Wachsprothese (siehe Figur 3 C)). Es sei angemerkt, dass mit der basalen Seite 4 und der koronalen Seite 3 nicht jeweils nur die seitlichen Enden, sondern die gesamten seitlichen Teilbereiche der Prothesenzähne 2 und deren virtueller Modelle 2', 2" bezeichnet werden. Die Okklusionsebene der Wachsprothese ist damit bereits festgelegt. Die virtuellen dreidimensionalen Modelle 2' der Prothesenzähne 2 werden im virtuellen dreidimensionalen Dentalprothesen-Modell 5' derart angeordnet, dass eine zur Mundraumsituation passende virtuelle Dentalprothese mit passender Okklusion der virtuellen Modelle 2' Prothesenzähne 2 berechnet wird. Dabei kann auch die Kaufunktion des zu erzeugenden Gebisses, also die Bewegung von Prothesenzähnen 2 und gegebenenfalls auch von verbliebenen echten Zähnen des Patienten simuliert werden, um die Lage und Orientierung des virtuellen Modells 2' der Prothesenzähne 2' in der virtuellen Prothesenbasis 6' anzupassen.

Anschließend wird das virtuelle dreidimensionale Dentalprothesen-Modell 5` rechnerisch durch File-Splitting in ein virtuelles dreidimensionales Modell der Prothesenbasis 6' und in ein virtuelles dreidimensionales Modell der Prothesenzähne 2' zerlegt (siehe Figur 2 B)). Dabei werden die Grenzflächen zwischen dem virtuellen Modell der Prothesenbasis 6' und dem virtuellen Modell der Prothesenzähne 2' mit Wurzeln 7' für die Prothesenzähne 2' und mit dazu passenden Zahnfächern als Negative der Wurzeln 7' in dem virtuellen Modell der Prothesenbasis 6' berechnet. 3D-Daten zur Form der Oberseite (in allen Figuren oben) des virtuellen dreidimensionalen Modells der Prothesenbasis 6` werden zusammen mit Daten zur Position und Lage der virtuellen dreidimensionalen Prothesenzähne 2' gespeichert.

Als nächstes werden die für die unbearbeiteten vorkonfektionierten Prothesenzähne 2 notwendigen Zahnfächer berechnet. Dazu werden virtuelle dreidimensionale Modelle 2" der unbearbeiteten vorkonfektionierten Prothesenzähne 2 entsprechend der Position und Lage der virtuellen dreidimensionalen Prothesenzähne 2' des virtuellen dreidimensionalen Dentalprothesen-Modells 5` nach Figur 2 B) in die Form der Oberseite des virtuellen dreidimensionalen Modells der Prothesenbasis 6` positioniert beziehungsweise eingerechnet. Anschließend werden in die Oberflächen Formen der basalen Seiten 4 der virtuellen dreidimensionalen Modelle 2" der unbearbeiteten vorkonfektionierten Prothesenzähne 2 entsprechend der Position und Lage im virtuellen dreidimensionalen Dentalprothesen-Modell 5` nach Figur 2 B) positioniert. Dabei werden die 3D-Daten zur Form der Oberseite des virtuellen dreidimensionalen Modells der Prothesenbasis 6' entsprechend der basalen Seiten 4 der dreidimensionalen virtuellen Modelle 2" der vorkonfektionierten Prothesenzähne 2 modifiziert und ein neuer Datensatz generiert, der die Form der Oberseite einer herzustellenden Prothesenbasis 8 der herzustellenden Wachsprothese vorgibt.

Ein entsprechend bearbeiteter Rohling 8 beziehungsweise eine physische Prothesenbasis 8 als Halbzeug ist in Figur 3 A) gezeigt. Die Prothesenbasis 8 wurde aus einem Rohling aus Wachs oder aus einem bei unter 80°C manuell formbaren, wachsartigen Kunststoff mit Hilfe einer computergesteuerten 5-Achs-Fräse auf Basis des zuvor erzeugten Datensatzes hergestellt, der die Form der Oberseite der herzustellenden Prothesenbasis 8 der herzustellenden Wachsprothese vorgibt. Das Wachs oder der wachsartige Kunststoff hat dabei einen Tropfpunkt zwischen 85°C und 115°C. In der Prothesenbasis 8 sind von der Oberseite ausgehend vier Zahnfächer 9 angeordnet, die Negative der basalen Seiten der vorkonfektionierten Prothesenzähne 2 sind. Der bearbeitete Rohling 8 und damit die zunächst nur an der Oberseite (in Figur 3 A) oben) geformte Prothesenbasis 8 ist dicker als die fertiggestellte Prothesenbasis 8 nach Figur 3 C). Die Zahnfächer 9 können dabei auch durch die gesamte Dicke der Prothesenbasis 8 reichen und so ein durchgehendes Loch bilden, so wie das für das Zahnfach 9 auf der linken Seite der Prothesenbasis 8 in Figur 3 A) angedeutet ist.

In einem nächsten Schritt werden die vorkonfektionierten Prothesenzähne 2 nach Figur 1 in die Prothesenbasis 8 eingesetzt und dort eingeklebt (siehe Figur 3 B)). Deren Lage und Position in der Prothesenbasis 8 ist dabei durch die Form der Zahnfächer 9 eindeutig vorgegeben. Dadurch ist auch die Okklusionsebene der Prothesenzähne 2 eindeutig vorgegeben. Als Klebstoff wird vorzugsweise das Wachs oder der wachsartige Kunststoff verwendet. Die Prothesenzähne 2 liegen an ihren basalen Seiten 4 beziehungsweise ihren Wurzeln flächenbündig an den Zahnfächern 9 an und werden dort stabil gehalten.

Die Unterseite der in Figur 3 B) gezeigten und erzeugten Wachsprothese entspricht noch nicht dem Dentalprothesen-Modell 5` nach Figur 2 A). Hierzu wird die in Figur 3 B) gezeigte Wachsprothese an der Unterseite mit der computergesteuerten 5-Achs-Fräse abgefräst. Die Wachsprothese nach Figur 3 B) kann dazu umgedreht werden. Bei der Bearbeitung der Wachsprothese von deren Unterseite (in allen Figuren unten), werden sowohl die Prothesenbasis 8 als auch alle Prothesenzähne 2 an der basalen Seite 4 bearbeitet und dabei die Prothesenzähne 2 gekürzt (siehe Figur 3 C)). Erfindungsgemäß werden dabei die Prothesenzähne 2 an der basalen Seite 4 stärker gekürzt, als das die Daten zur Oberfläche der Unterseite des virtuellen dreidimensionalen Modells der Prothesenbasis 6' vorgeben. Bereits eine sehr geringe übermäßige Kürzung von 0,01 mm kann dabei ausreichen, wenn die Wachsprothese sehr sorgfältig und mit hoher Genauigkeit hergestellt wurde. Erfindungsgemäß wird jedoch eine übermäßige Kürzung um 0,1 mm bis 0,5 mm bevorzugt, um eine ausreichende manuelle Veränderung der Lage und der Position der Prothesenzähne 2 in der Prothesenbasis 8 zu erlauben, ohne dass danach Kanten der basalen Seiten 4 der Prothesenzähne 2 an der Unterseite der Wachsprothese beziehungsweise der Unterseite der Prothesenbasis 8 hervorstehen beziehungsweise dabei hindurchdringen. Die in Figur 3 C) gezeigte erfindungsgemäße Wachsprothese kann so beim Patienten anprobiert werden und dabei die Lage und die Orientierung einzelner oder auch aller Prothesenzähne 2 geringfügig angepasst werden.

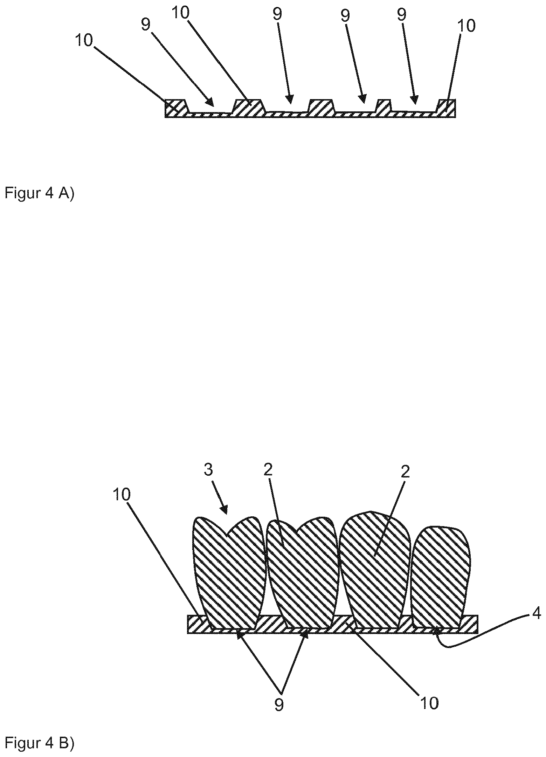

Bei einer ersten Ausführung eines erfindungsgemäßen Verfahrens zur automatisierten Herstellung einer endgültigen Dentalprothese unter Anwendung der Wachsprothese und damit des erfindungsgemäßen Verfahrens zur Herstellung der Wachsprothese nach Figur 3 C), die in den Figuren 4 A) und 4 B) gezeigt ist, wird nun die am Patienten korrigierte Wachsprothese mit einem 3D-Scanner eingescannt. Dabei werdend auch die am Patienten korrigierten Lagen und Orientierungen der Prothesenzähne 2 in der Prothesenbasis 8 erfasst. Die Form der basalen Seiten 4 der Prothesenzähne 2 kann dabei dem Datensatz entnommen werden, mit dem die Kürzung der Prothesenzähne 2 zur Herstellung der Prothesenzähne 2 in Figur 3 C) erfolgte. Die Oberseite einer herzustellenden Prothesenbasis 10 für die endgültige Dentalprothese entspricht der eingescannten Form, die entsprechend dem virtuellen dreidimensionalen Modell der Dentalprothese nach Figur 2 A) korrigiert beziehungsweise verbessert werden kann, und den Zahnfächern 9, die der Form der bearbeiteten basalen Seiten 4 der Prothesenzähne 2 entsprechen. Die Unterseite der herzustellenden Prothesenbasis 10 entspricht der Unterseite des virtuellen dreidimensionalen Modells der Dentalprothese nach Figur 2 A) beziehungsweise des virtuellen dreidimensionalen Modells der Prothesenbasis 6` nach Figur 2 B). Aus diesen Daten wird mit der computergesteuerten 5-Achs-Fräse aus einem Rohling aus einem harten und passend zum Zahnfleisch gefärbten Kunststoff die Prothesenbasis 10 für die endgültige Dentalprothese gefräst (siehe Figur 4 A)).

Anschließend werden die nach Figur 3 C) basal gekürzten Prothesenzähne 2 aus der Wachsprothese nach Figur 3 C) entnommen, Wachs- oder Kunststoffreste sowie gegebenenfalls Klebstoffreste entfernt und die Prothesenzähne 2 in die Prothesenbasis 10 eingesetzt und eingeklebt. Durch die Form der Zahnfächer 9 ist die Position und Lage der basal bearbeiteten Prothesenzähne 2 eindeutig festgelegt. Zudem werden die Prothesenzähne 2 durch die flächenbündige Form der Zahnfächer 9 mit den basalen Seiten 4 der Prothesenzähne 2 gestützt.

Als Klebstoff kann ein Zement, ein dentaler Spezialkleber oder ein Sekundenkleber im leichten Überschuss verwendet werden. Hervorquellende überschüssige Zementteigreste oder Kleberreste können vor dem Aushärten und/oder nach dem Aushärten entfernt werden. Beim Berechnen der Zahnfächer kann auch ein Klebespalt berücksichtigt und vorgesehen werden. Zur endgültigen Befestigung der Prothesenzähne 2 in der Prothesenbasis 10 wird bevorzugt ein selbsthärtender Zement auf Pulver-Flüssigkeitsbasis verwendet. Der Klebstoff beziehungsweise der Zement kann auch oder zusätzlich auf die Wurzeln 7 der Prothesenzähne 2 aufgebracht werden.

Nach dem Einkleben der Prothesenzähne 2 in die Zahnfächer 9 der Prothesenbasis 10 ist die endgültige Dentalprothese fertiggestellt (siehe Figur 4 B)). Die Dentalprothese kann durch Polieren und Entfernen von Klebstoffresten finalisiert werden.

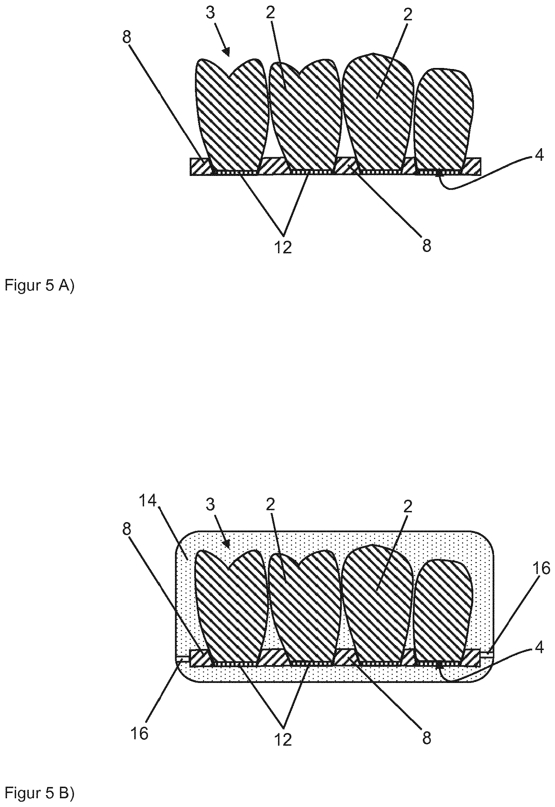

Bei einer zweiten alternativen Ausführung eines erfindungsgemäßen Verfahrens zur manuellen Herstellung einer endgültigen Dentalprothese unter Anwendung der Wachsprothese und damit des erfindungsgemäßen Verfahrens zur Herstellung der Wachsprothese nach Figur 3 C), die in den Figuren 5 A) bis 7 B) gezeigt ist, wird ein Wachs oder ein wachsartiger Kunststoff in die Löcher an der Unterseite der Prothesenbasis 8 geschmiert. Alternativ kann dieser Verschluss 12 (siehe Figur 5 A)) auch mit einem 3D-Drucker aufgedruckt werden, wobei hierzu die Daten zur Unterseite des virtuellen dreidimensionalen Dentalprothesen-Modells 5` nach Figur 2 A) beziehungsweise des virtuellen dreidimensionalen Modells der Prothesenbasis 6` nach Figur 2 B) verwendet werden. In einem nachfolgenden Schritt kann der Verschluss 12, wenn er im Überschuss aufgetragen wurde, auch mit der computergesteuerten 5-Achs-Fräse von der Unterseite der Wachsprothese aus bearbeitet werden, entsprechend der Daten zur Unterseite des virtuellen dreidimensionalen Dentalprothesen-Modells 5` nach Figur 2 A) beziehungsweise des virtuellen dreidimensionalen Modells der Prothesenbasis 6` nach Figur 2 B). Die in Figur 5 A) gezeigte erfindungsgemäße Wachsprothese kann beim Patienten eingepasst werden und dabei die Lage und Orientierung zumindest eines Prothesenzahns 2 korrigiert werden. Alternativ kann auch zuvor die in Figur 3 C) gezeigte Wachsprothese zur Anpassung am Patienten verwendet werden und der Verschluss 12 erst anschließend erzeugt werden.

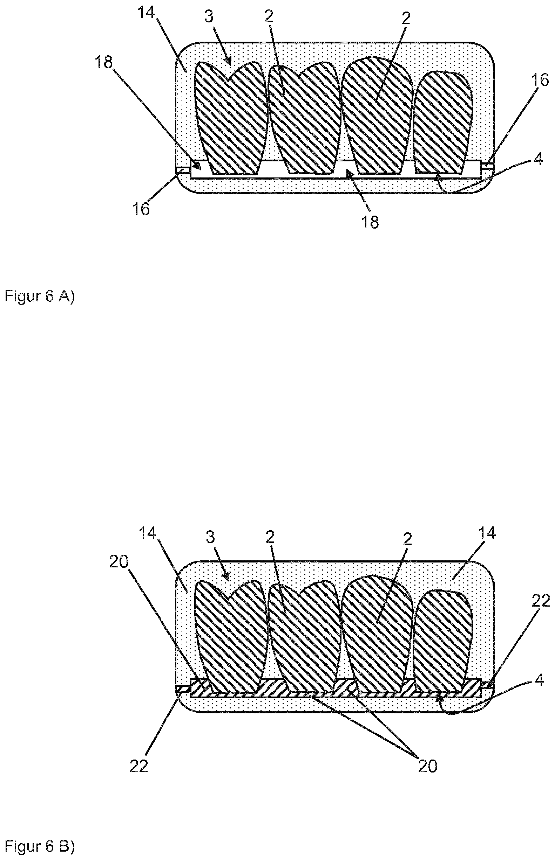

Die in der Aufstellung der Prothesenzähne 2 korrigierte Wachsprothese mit den basalen Verschlüssen 12 wird anschließend in eine Küvette 14 aus Silikon oder Gips oder Gel eingegossen, so wie dies in Figur 5 B) gezeigt ist. Dabei werden Kanäle 16 freigehalten. Das Wachs oder der wachsartige Kunststoff der Prothesenbasis 8 wird anschließend durch Ausbrühen mit Wasserdampf oder Ausschmelzen oder auch chemisch durch Wegätzen beziehungsweise Auflösen entfernt. Zurück bleibt die Küvette 14 als Hohlform, so wie sie in Figur 6 A) dargestellt ist. Die Küvette 14 begrenzt dabei einen Hohlraum 18, der in seiner äußeren Form der Form der zu erzeugenden Prothesenbasis 20 entspricht. Die Prothesenzähne 2 verbleiben dabei innerhalb der Küvette 14 in der Position und Lage, die durch die manuell veränderte Wachsprothese nach Figur 5 A) vorgegeben wurde. Die basalen Seiten 4 der bearbeiteten vorkonfektionierten Prothesenzähne 2 ragen dabei in den Hohlraum 18 hinein.

Die Küvette 14 wird anschließend durch die Kanäle 16 mit einen zum Zahnfleisch passend farblich gestalteten Kunststoff ausgegossen. Der Kunststoff härtet in dem Hohlraum 18 aus und bildet die Prothesenbasis 20 der endgültigen Dentalprothese, so wie dies in Figur 6 B) gezeigt ist. Dabei werden die basalen Seiten 4 der Prothesenzähne 2 in dem Kunststoff eingebettet und mit diesem verbunden. Die Kanäle 16 bilden dabei aus dem ausgehärteten Kunststoff Stege 22, die an der Prothesenbasis 20 angeordnet sind. Durch das basale Kürzen der Prothesenzähne 2 sind die basalen Seiten 4 der Prothesenzähne 2 an der Unterseite der Prothesenbasis 20 von dem Kunststoff der Prothesenbasis 20 abgedeckt und physisch gehalten.

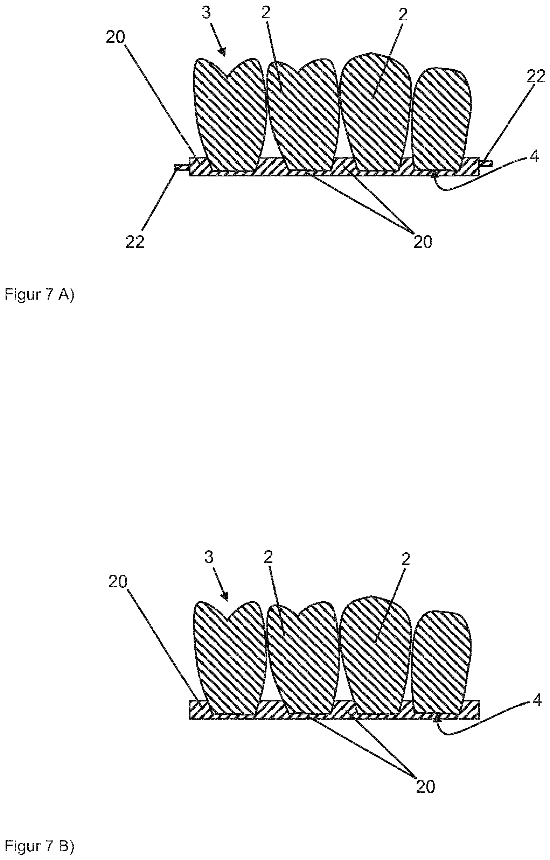

In einem nächsten Schritt wird die Küvette 14 entfernt und dabei die endgültige Dentalprothese entformt, so wie dies in Figur 7 A) gezeigt ist. Anschließend werden noch die Stege 22 entfernt, nötigenfalls die Prothesenbasis 20 entgratet und die Prothesenbasis 20 poliert. Die Dentalprothese ist dann, so wie sie in Figur 7 B) gezeigt ist, fertiggestellt.

Da die Prothesenzähne 2 direkt in den Kunststoff eingebettet werden und daher kein Klebstoff zum Verbinden der Prothesenbasis 20 mit den Prothesenzähnen 2 notwendig ist, stimmt die Position und Lage der Prothesenzähne 2 exakt mit der Position und Lage der Prothesenzähne 2 in der Wachsprothese nach Figur 5 A) überein. Die so hergestellte Dentalprothese nach Figur 7 B) hat also den Vorteil, dass die Position und Lage der Prothesenzähne 2 nicht von einem variablen Klebespalt beeinflusst wird, da die Prothesenzähne 2 unmittelbar im Kunststoff der Prothesenbasis 20 eingebettet werden.

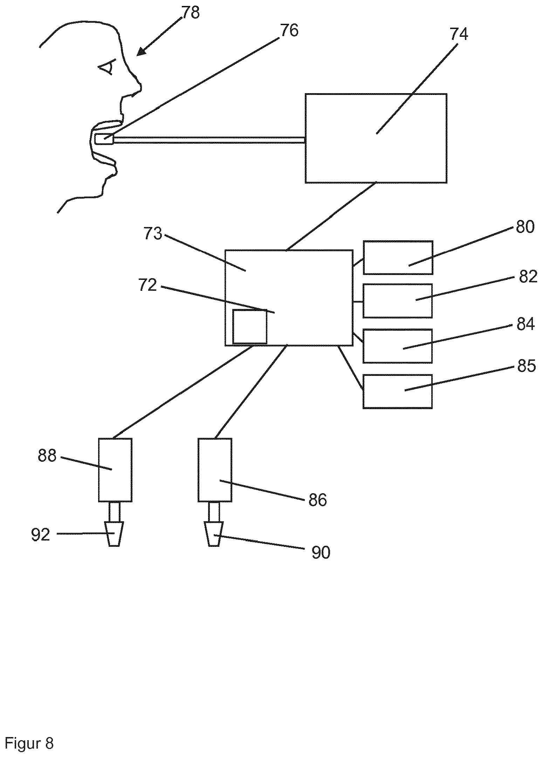

Figur 8 zeigt eine schematische Darstellung einer Vorrichtung zur Umsetzung eines erfindungsgemäßen Verfahrens. Die Vorrichtung kann auch als eine Kombination mehrerer miteinander verbundener Vorrichtungen verstanden werden.

Die Vorrichtung umfasst einen Computer 72, der geeignet programmiert ist, um die wesentlichen Schritte eines erfindungsgemäßen Verfahrens als Steuerung umzusetzen. Der Computer 72 weist einen elektronischen Datenspeicher 73 auf, auf den der Computer 72 Zugriff hat und in dem die virtuellen dreidimensionalen Modelle zur Umsetzung des Verfahrens gespeichert sind beziehungsweise speicherbar und zwischenspeicherbar sind. Beispielsweise können in dem Datenspeicher 73 die virtuellen dreidimensionalen Formen 2" unterschiedlicher Sätze von vorkonfektionierten Prothesenzähnen 2 gespeichert sein, so dass mit dem Programm zur Umsetzung des Verfahrens auf diese Datensätze zugegriffen werden kann, um das virtuelle dreidimensionale Dentalprothesen-Modell 5` zu berechnen, in das die Daten dieser Formen der Prothesenzähne 2 (insbesondere deren koronale Seiten 3 und zervikale Seiten 4) eingerechnet werden.

Der Computer 72 ist mit einem Intraoralscanner 74 verbunden. Der Intraoralscanner 74 umfasst einen Scanner-Kopf 76, der in den Mundraum eines Patienten 78 eingeführt werden kann, um die Mundraumsituation beim Patienten 78 aufzunehmen. Der Intraoralscanner 74 scannt so die Oberfläche der Mukosa und gegebenenfalls vorhandener Zähne des Patienten 78 ein. Diese Daten können im Datenspeicher 73 des Computers 72 als virtuelles dreidimensionales Modell der Mundraumsituation des Patienten 78 gespeichert werden.

Aus diesem Modell der Mundraumsituation des Patienten 78 und den gespeicherten virtuellen dreidimensionalen Formen 2" der vorkonfektionierten Prothesenzähne 2 wird mit Hilfe eines Dentalprothesenberechnungsmoduls 80 das virtuelle dreidimensionale Dentalprothesen-Modell 5' berechnet.

Die Vorrichtung umfasst des Weiteren ein Zahnfach-Modul 82 zur Berechnung der Zahnfächer 9 in der Oberseite des virtuellen dreidimensionalen Modells der Prothesenbasis 6' aus zumindest einem virtuellen dreidimensionalen Modell 2" der unbearbeiteten vorkonfektionierten Prothesenzähne 2. Das so berechnete virtuelle dreidimensionale Dentalprothesen-Modell 5' wird mit Hilfe eines File-Splitting-Moduls 84 zur rechnerischen Trennung des virtuellen dreidimensionalen Dentalprothesen-Modells 5' in das virtuelle dreidimensionale Modell der Prothesenbasis 6' und das virtuelle dreidimensionale Modell 2' der Prothesenzähne 2 getrennt. Die Zwischenergebnisse werden in dem Datenspeicher 73 zwischengespeichert.

Die Vorrichtung umfasst ferner ein Kürzungs-Modul 85, mit dem die basale Form der gekürzten Prothesenzähne 2 berechnet wird. Dazu werden die basalen Seiten 4 der Prothesenzähne 2 als virtuelle dreidimensionale Modelle derart berechnet, dass die basalen Seiten 4 der Prothesenzähne 2 von der Unterseite des virtuellen dreidimensionalen Modells der Prothesenbasis 6' mit einem festen Abstand von mindestens 0,01 mm oder von mindestens 0,05 mm oder einem Abstand zwischen 0,1 mm und 0,5 mm beabstandet werden. Anhand der Berechnungen des Kürzungs-Moduls 85 werden die in die Zahnfächer 9 der an der Oberseite bearbeiteten Prothesenbasis 8 eingesetzten unbearbeiteten vorkonfektionierten Prothesenzähne 2 an der basalen Seite 4 gekürzt.

Zur Bearbeitung des Prothesenbasisrohlings 8 (siehe Figur 3 A) und Figur 3 C)) wird eine erste CAM-gesteuerte 5-Achs-Fräse 88 mit einem Fräskopf 92 vom Computer 72 gesteuert. Dabei werden die Zahnfächer 9 entsprechend den Berechnungen des Zahnfach-Moduls 82 in einen Rohling oder eine Ronde hineingearbeitet, so dass daraus die Prothesenbasis 8 entsteht (siehe Figur 3 A)).

Zur basalen und zervikalen Bearbeitung beziehungsweise Kürzung der Prothesenzähne 2, das heißt zur Ausformung der basalen Seiten 4 an den physischen Prothesenzähnen 2, wird von dem Computer 72 eine zweite CAM-gesteuerte 5-Achs-Fräse 86 mit einem Fräskopf 90 gesteuert. Mit der zweiten CAM-gesteuerten 5-Achs-Fräse 86 werden die unbearbeiteten Prothesenzähne 2 (siehe Figur 3 B)) an der basalen Seite 4 zervikal bearbeitet und dabei die basalen Seiten 4 entsprechend dem virtuellen dreidimensionalen Modell der basalen Seiten 4 der Prothesenzähne 2 entsprechend den Berechnungen des Kürzungs-Moduls 85 herausarbeitet (siehe Figur 3 C)). Alternativ kann auch die erste CAM-gesteuerte 5-Achs-Fräse 88 zur Bearbeitung beziehungsweise Kürzung der Prothesenzähne 2 verwendet werden.

Das virtuelle dreidimensionale 2" Modell der vorkonfektionierten Prothesenzähne 2 kann aus einer Mehrzahl von einzelnen virtuellen dreidimensionale Modellen 2" der Prothesenzähne 2 bestehen. Für jeden einzelnen Prothesenzahn 2 kann ein eigenes virtuelles dreidimensionales Modell vorliegen. Aus der Gesamtheit dieser einzelnen virtuellen dreidimensionalen Modelle ergibt sich dann das virtuelle dreidimensionale Modell 2" der Prothesenzähne 2.

### Bezugszeichenliste

- 2: Prothesenzahn
- 2': virtuelles Modell der Prothesenzähne
- 2": virtuelles Modell der vorkonfektionierten Prothesenzähne
- 3: Koronale Seite
- 4: Basale Seite
- 5': virtuelles Dentalprothesen-Modell
- 6': virtuelles Modell der Prothesenbasis
- 7': Wurzel
- 8: Prothesenbasis / bearbeiteter Rohling
- 9: Zahnfach
- 10: Prothesenbasis
- 12: Verschluss
- 14: Küvette
- 16: Kanal
- 18: Hohlraum
- 20: Prothesenbasis
- 22: Steg
- 72: Computer
- 73: elektronischer Datenspeicher
- 74: Intraoralscanner
- 76: Scanner-Kopf
- 78: Patient
- 80: Dentalprothesenberechnungsmodul
- 82: Zahnfach-Modul
- 84: File-Splitting-Modul
- 85: Kürzungs-Modul
- 86: Computergesteuerte 5-Achs-Fräse
- 88: Computergesteuerte 5-Achs-Fräse
- 90: Fräskopf
- 92: Fräskopf

## Patentansprüche

1. Verfahren zur Herstellung einer Wachsprothese, wobei die Wachsprothese eine Prothesenbasis (8) und mehrere basal bearbeitete vorkonfektionierte Prothesenzähne (2) aufweist und wobei das Verfahren unter Verwendung eines virtuellen dreidimensionalen Dentalprothesen-Modells (5`) durchgeführt wird, wobei das Verfahren die folgenden Schritte umfasst:
A) Teilen des virtuellen dreidimensionalen Dentalprothesen-Modells (5`) der herzustellenden physischen Wachsprothese in zumindest ein virtuelles dreidimensionales Modell (2') der Prothesenzähne (2) und ein virtuelles dreidimensionales Modell (6`) einer Prothesenbasis (8, 10, 20) oder Verwenden zumindest eines vorhandenen virtuellen dreidimensionalen Modells (2') der Prothesenzähne (2) und eines vorhandenen virtuellen dreidimensionalen Modells (6') der Prothesenbasis (8, 10, 20),
B) Bereitstellen eines Rohlings aus Wachs oder aus einem bei unter 80°C manuell formbaren, wachsartigen Kunststoff,
C) Subtraktives Bearbeiten des bereitgestellten Rohlings mit einer ersten CAM-Vorrichtung (88) entsprechend den Daten der Oberseite des virtuellen dreidimensionalen Modells (6') der Prothesenbasis (8, 10, 20),
D) Herstellen von mehreren Zahnfächern (9) in der Oberseite des bearbeiteten Rohlings (8), wobei für jeden gemäß dem virtuellen dreidimensionalen Dentalprothesen-Modell (5`) einzusetzenden vorkonfektionierten Prothesenzahn (2) ein Zahnfach (9) in dem Rohling (8) hergestellt wird, wobei die Zahnfächer (9) derart tief ausgeführt werden, so dass jeder unbearbeitete vorkonfektionierte Prothesenzahn (2) derart in das jeweilige Zahnfach (9) einsetzbar ist, dass die Okklusionsebene der eingesetzten vorkonfektionierten Prothesenzähne (2) der Okklusionsebene des virtuellen dreidimensionalen Dentalprothesen-Modells (5') entspricht, **gekennzeichnet durch** die weiteren Schritte
E) Einsetzen und Befestigen der unbearbeiteten vorkonfektionierten Prothesenzähne (2) in die jeweiligen Zahnfächer (9) des von der Oberseite bearbeiteten Rohlings (8),
F) Kürzen der basalen Seiten (4) der in dem bearbeiteten Rohling (8) befestigten vorkonfektionierten Prothesenzähne (2) mit der ersten CAM-Vorrichtung (88) oder einer zweiten CAM-Vorrichtung (86) nach Maßgabe der Daten zur Unterseite des virtuellen dreidimensionalen Modells (6`) der Prothesenbasis (8, 10, 20), wobei die vorkonfektionierten Prothesenzähne (2) stärker gekürzt werden, als es die Daten zur Unterseite des virtuellen dreidimensionalen Modells (6') der Prothesenbasis (8, 10, 20) vorgeben,
G) Subtraktives Bearbeiten der Unterseite des bearbeiteten Rohlings (8) mit der ersten CAM-Vorrichtung (88) oder der zweiten CAM-Vorrichtung (86) oder einer dritten CAM-Vorrichtung entsprechend den Daten der Unterseite des virtuellen dreidimensionalen Modells (6') der Prothesenbasis (8, 10, 20).

2. Verfahren nach Anspruch 1, **dadurch gekennzeichnet, dass**
die erste CAM-Vorrichtung (88) oder die zweite CAM-Vorrichtung (86) eine computergesteuerte Fräse (86, 88) ist, insbesondere eine Fräse (86, 88) mit mindestens 5 Achsen, oder die erste und die zweite und gegebenenfalls die dritte CAM-Vorrichtung (86, 88) computergesteuerte Fräsen (86, 88) sind, insbesondere mindestens 5-Achs-Fräsen (86, 88), wobei das subtraktive Bearbeiten des Rohlings (8) in Schritt C) und in Schritt G) sowie das Kürzen der basalen Seiten (4) der vorkonfektionierten Prothesenzähne (2) in Schritt F) durch Fräsen erfolgen, wobei vorzugsweise
zumindest die erste computergesteuerte Fräse (88) einen Anstellwinkel von mehr als 25° aufweist, insbesondere einen Anstellwinkel von zumindest 30°, wobei vorzugsweise alle verwendeten computergesteuerten Fräsen (86, 88) einen Anstellwinkel von mehr als 25° aufweisen, insbesondere einen Anstellwinkel von zumindest 30°.

3. Verfahren nach einem der vorangehenden Ansprüche, **dadurch gekennzeichnet, dass** in Schritt E) die unbearbeiteten vorkonfektionierten Prothesenzähne (2) durch Verkleben in den jeweiligen Zahnfächern (9) befestigt werden, vorzugsweise durch Verkleben mit dem Wachs oder mit dem wachsartigen Kunststoff, aus dem der Rohling (8) besteht.

4. Verfahren nach einem der vorangehenden Ansprüche, **dadurch gekennzeichnet, dass** die Zahnfächer (9) derart geformt ausgeführt werden, dass die vorkonfektionierten Prothesenzähne (2) in den jeweiligen Zahnfächern (9) flächenbündig anliegen, wobei bevorzugt die vorkonfektionierten Prothesenzähne (2) in den jeweiligen Zahnfächern (9) an einem Umfang der Prothesenzähne (2), insbesondere am Zahnhals der Prothesenzähne (2) oder zervikal, flächenbündig anliegen.

5. Verfahren nach einem der vorangehenden Ansprüche, **dadurch gekennzeichnet, dass** beim basalen Kürzen der basalen Seiten (4) der in dem bearbeiteten Rohling (8) befestigten vorkonfektionierten Prothesenzähne (2) in Schritt F) auch der bearbeitete Rohling (8) an dessen Unterseite bereichsweise stärker subtraktiv bearbeitet wird, als es die Daten zur Unterseite des virtuellen dreidimensionalen Modells (6`) der Prothesenbasis (8, 10, 20) vorgeben, wobei vorzugsweise die Bereiche an der Unterseite des bearbeiteten Rohlings (8), die an die befestigten vorkonfektionierten Prothesenzähne (2) angrenzen, stärker subtraktiv bearbeitet werden, als es die Daten zur Unterseite des virtuellen dreidimensionalen Modells (6') der Prothesenbasis (8, 10, 20) vorgeben.

6. Verfahren nach einem der vorangehenden Ansprüche, **dadurch gekennzeichnet, dass** die Schritte C) und D) und/oder die Schritte F) und G) in einem gemeinsamen Arbeitsschritt erfolgen, und/oder
die Schritte C) und D) chronologisch nach den Schritten A) und B) erfolgen, der Schritt E) chronologisch nach den Schritten C) und D) erfolgt und die Schritte F) und G) chronologisch nach Schritt E) erfolgen.

7. Verfahren nach einem der vorangehenden Ansprüche, **gekennzeichnet durch** Erfassen von Oberflächendaten des Kiefers des zahnlosen oder teilweise zahnlosen Patienten (78) durch intraoralen 3D-Scan, durch Abformung des Kiefers und 3D-Scan der Abformung oder durch Abformung, Herstellung eines Modells der Abformung und 3D-Scan des Modells vor Schritt A).

8. Verfahren nach einem der vorangehenden Ansprüche, **gekennzeichnet durch** Erzeugen des virtuellen dreidimensionalen Dentalprothesen-Modells (5`) oder des virtuellen dreidimensionalen Modells (6') der Prothesenbasis (8, 10, 20) durch ein CAD-Verfahren, wobei hierzu CAD-Daten zur äußeren Form der vorkonfektionierten Prothesenzähne (2) verwendet werden und/oder die Oberflächendaten des Kiefers verwendet werden.

9. Verfahren nach einem der vorangehenden Ansprüche, **dadurch gekennzeichnet, dass** die Zahnfächer (9) in Schritt D) mit Positionierhilfen geformt werden, so dass die Form jedes Zahnfachs (9) den jeweilig einzusetzenden vorkonfektionierten Prothesenzahn (2) vorgibt, vorzugsweise die Form jedes Zahnfachs (9) nur zu dem jeweilig einzusetzenden vorkonfektionierten Prothesenzahn (2) passt, und/oder in Schritt F) oder G) zumindest zwei der Zahnfächer (9) zu durchgehenden Löcher in der Prothesenbasis (8) umgeformt werden, durch die die basalen Seiten (4) zumindest zweier der bearbeiteten Prothesenzähne (2) von der Unterseite der Prothesenbasis (8) zugänglich sind.

10. Verfahren nach einem der vorangehenden Ansprüche, **gekennzeichnet durch** Auftragen eines Wachses oder eines bei unter 80°C manuell formbaren, wachsartigen Kunststoffs auf die Unterseite der Prothesenbasis (8), so dass alle bis zur Unterseite der Prothesenbasis (8) reichenden Zahnfächer (9), an der Unterseite verschlossen werden.

11. Verfahren nach einem der vorangehenden Ansprüche, **dadurch gekennzeichnet, dass** in Schritt F) die basalen Seiten (4) der in dem bearbeiteten Rohling (8) befestigten vorkonfektionierten Prothesenzähne (2) um zumindest 0,01 mm stärker gekürzt werden, als es die Daten zur Unterseite des virtuellen dreidimensionalen Modells (6`) der Prothesenbasis (8, 10, 20) vorgeben, bevorzugt um 0,05 mm bis 1 mm stärker gekürzt werden, besonders bevorzugt um 0,1 mm bis 0,5 mm stärker gekürzt werden, als es die Daten zur Unterseite des virtuellen dreidimensionalen Modells (6`) der Prothesenbasis (8, 10, 20) vorgeben.

12. Verfahren nach einem der vorangehenden Ansprüche, **dadurch gekennzeichnet, dass** die Stellung wenigstens eines der Prothesenzähne (2) in der fertigen Wachsprothese verändert wird, und/oder
die Lage und/oder die Orientierung der virtuellen Prothesenzähne (2) im virtuellen dreidimensionalen Dentalprothesen-Modell (5`) durch eine Simulation der Lage der Dentalprothese im Mundraum des Patienten (78) ausgewählt wird und/oder durch eine Simulation der Lage und Orientierung der Prothesenzähne (2) zueinander und/oder zur Prothesenbasis (8, 10, 20) ausgewählt wird, wobei bevorzugt zusätzlich die Okklusionsebene und/oder die Kaubewegungen des Kiefers simuliert werden.

13. Verfahren nach einem der vorangehenden Ansprüche, **dadurch gekennzeichnet, dass** in Schritt D) die Zahnfächer (9) derart tief ausgeführt werden und derart ausgeformt werden, so dass jeder unbearbeitete vorkonfektionierte Prothesenzahn (2) derart in das jeweilige Zahnfach (9) einsetzbar ist, dass die Okklusionsflächen der eingesetzten vorkonfektionierten Prothesenzähne (2) den Okklusionsflächen des virtuellen dreidimensionalen Dentalprothesen-Modells (5`) entsprechen, und/oder
das Wachs oder der bei unter 80°C manuell formbare, wachsartige Kunststoff einen Tropfpunkt zwischen 50°C und 150°C aufweist, bevorzugt einen Tropfpunkt zwischen 85°C und 115°C.

14. Verfahren zur Herstellung einer Dentalprothese unter Verwendung einer Wachsprothese, wobei die Wachsprothese mit einem Verfahren nach einem der vorangehenden Ansprüche hergestellt wird, **gekennzeichnet durch** die weiteren chronologisch nachfolgenden Schritte
H) Einbetten der Wachsprothese mit den darin befestigten basal bearbeiteten Prothesenzähnen (2) in ein Einbettmaterial zur Herstellung einer Küvette (14),
I) Ausbrühen oder Ausschmelzen der Prothesenbasis (8) der eingebetteten Wachsprothese, so dass die Küvette (14) entsteht, in der die Prothesenzähne (2) enthalten sind, und
J) Einfüllen eines Kunststoffs in die Küvette (14), Aushärten des eingefüllten Kunststoffs und Entformen der so erzeugten Dentalprothese aus der Küvette (14),
oder **gekennzeichnet durch** die weiteren chronologisch nachfolgenden Schritte
H2) 3D-Einscannen der Wachsprothese mit den darin befestigten basal bearbeiteten Prothesenzähnen (2),
I2) Erzeugen eines CAD-Modells (6') einer Prothesenbasis (8, 10, 20) der herzustellenden Dentalprothese auf Basis des 3D-Scans nach Schritt H2), wobei vorzugsweise das CAD-Modell (6`) zusätzlich auf Basis der Daten des virtuellen dreidimensionalen Modells (6') der Prothesenbasis (8, 10, 20) für die Wachsaufstellung zur Berechnung der Unterseite des CAD-Modells (6`) der Prothesenbasis (8, 10, 20) der herzustellenden Dentalprothese erzeugt wird,
J2) Herstellen der Prothesenbasis (10) der herzustellenden Dentalprothese aus Kunststoff mit einem CAM-Verfahren auf Basis des CAD-Modells (6'), und
K2) Entfernen der Prothesenzähne (2) aus der Wachsprothese, wobei vorzugsweise Wachsreste von den Prothesenzähnen (2) entfernt werden, und nachfolgend Einsetzen und Einkleben der Prothesenzähne (2) in die Prothesenbasis (10) der herzustellenden Dentalprothese.

## Claims

1. A method for producing a wax prosthesis, the wax prosthesis comprising a prosthetic base (8) and a plurality of basally processed prefabricated prosthetic teeth (2), and the method being carried out using a virtual three-dimensional dental prosthesis model (5'), the method comprising the following steps:
A) Dividing the virtual three-dimensional dental prosthesis model (5') of the physical wax prosthesis to be produced into at least one virtual three-dimensional model (2') of the prosthetic teeth (2) and a virtual three-dimensional model (6') of a prosthetic base (8, 10, 20), or using at least one existing virtual three-dimensional model (2') of the prosthetic teeth (2) and an existing virtual three-dimensional model (6) of the prosthetic base (8, 10, 20);
B) Providing a blank made of wax or made of a wax-like plastic material that can be manually shaped at less than 80°C;
C) Subtractive processing of the provided blank using a first CAM device (88) according to the data of the upper face of the virtual three-dimensional model (6') of the prosthetic base (8, 10, 20);
D) Producing a plurality of dental sockets (9) in the upper face of the processed blank (8), one dental socket (9) being produced in the blank (8) for each prefabricated prosthetic tooth (2) to be inserted according to the virtual three-dimensional dental prosthesis model (5'), and the tooth sockets (9) being designed to be so deep that each unprocessed prefabricated prosthetic tooth (2) can be inserted in such a way into the particular dental socket (9) that the occlusal plane of the inserted prefabricated prosthetic teeth (2) corresponds to the occlusal plane of the virtual three-dimensional dental prosthesis model (5'), **characterized by** the further steps:
E) Inserting and fixing the unprocessed prefabricated prosthetic teeth (2) in the particular dental sockets (9) of the blank (8) processed from the upper face;
F) Shortening the basal sides (4) of the prefabricated prosthetic teeth (2), which are fixed in the processed blank (8), using the first CAM device (88) or a second CAM device (86), in accordance with the data regarding the lower face of the virtual three-dimensional model (6') of the prosthetic base (8, 10, 20), the prefabricated prosthetic teeth (2) being shortened to a greater degree than is specified by the data regarding the lower face of the virtual three-dimensional model (6') of the prosthetic base (8, 10, 20); and
G) Subtractive processing of the lower face of the processed blank (8) to using the first CAM device (88) or the second CAM device (86) or a third CAM device, according to the data of the lower face of the virtual three-dimensional model (6') of the prosthetic base (8, 10, 20).

2. The method according to claim 1, **characterized in that**
the first CAM device (88) or the second CAM device (86) is a computer-controlled milling cutter (86, 88), and in particular a milling cutter (86, 88) having at least 5 axes, or the first and second, and optionally the third, CAM devices (86, 88) are computer-controlled milling cutters (86, 88), and in particular least 5-axis milling cutters (86, 88), the subtractive processing of the blank (8) in step C) and in step G) as well as the shortening of the basal sides (4) of the prefabricated prosthetic teeth (2) in step F) being carried out by way of milling, wherein preferably
at least the first computer-controlled milling cutter (88) having a lead angle of more than 25°, and in particular a lead angle of at least 30°, preferably all used computer-controlled milling cutters (86, 88) having a lead angle of more than 25°, and in particular a lead angle of at least 30°.

3. The method according to any one of the preceding claims, **characterized in that** in step E) the unprocessed prefabricated prosthetic teeth (2) are fixed in the according dental sockets (9) by bonding, and preferably by bonding with the wax or with the wax-like plastic material, of which the blank (8) is made.

4. The method according to any one of the preceding claims, **characterized in that** the dental sockets (9) are performed in such a shape that the prefabricated prosthetic teeth (2) rest flush with the adjacent areas in the according dental sockets (9), the prefabricated prosthetic teeth (2) preferably resting flush with the adjacent areas in the according dental sockets (9) at a circumference of the prosthetic teeth (2), and in particular at the neck of the prosthetic teeth (2), or cervically.

5. The method according to any one of the preceding claims, **characterized in that**, during the basal shortening of the basal sides (4) of the prefabricated prosthetic teeth (2) fixed in the processed blank (8) in step F), the processed blank (8) is also subjected to subtractive processing in some regions on the lower face thereof to a greater degree than is specified by the data regarding the lower face of the virtual three-dimensional model (6') of the prosthetic base (8, 10, 20), wherein preferably the regions on the lower face of the processed blank (8) which adjoin the fixed prefabricated prosthetic teeth (2) being subjected to subtractive processing to a greater degree than is specified by the data regarding the lower face of the virtual three-dimensional model (6') of the prosthetic base (8, 10, 20).

6. The method according to any one of the preceding claims, **characterized in that** the steps C) and D) and/or the steps F) and G) are carried out in a shared work step, and/or
the steps C) and D) are carried out chronologically after the steps A) and B), the step E) is carried out chronologically after the steps C) and D), and the steps F) and G) are carried out chronologically after step E).

7. The method according to any one of the preceding claims, **characterized by** Detecting surface data of the jaw of the toothless or partially toothless patient (78) by creating an intraoral 3D scan, by taking an impression of the jaw and creating a 3D scan of the impression, or by taking an impression, producing a model of the impression and creating a 3D scan of the model prior to step A).

8. The method according to any one of the preceding claims, **characterized by** Generating the virtual three-dimensional dental prosthesis model (5') or the virtual three-dimensional model (6') of the prosthetic base (8, 10, 20) by way of a CAD method, CAD data regarding the outer shape of the prefabricated prosthetic teeth (2) being used and/or the surface data of the jaw being used for this purpose.

9. The method according to any one of the preceding claims, **characterized in that** the tooth sockets (9) in step D) are shaped using positioning aids, so that the shape of each tooth socket (9) predefines the respective prefabricated prosthetic tooth (2) to be inserted, and preferably adapts the shape of each tooth socket (9) only to the particular prefabricated prosthetic tooth (2) to be inserted, and/or
in step F) or G) at least two of the tooth sockets (9) are reshaped into through-holes in the prosthetic base (8), through which the basal sides (4) of at least two of the processed prosthetic teeth (2) are accessible from the lower face of the prosthetic base (8).

10. The method according to any one of the preceding claims, **characterized by** applying a wax or a wax-like plastic material that can be manually shaped at less than 80°C to the lower face of the prosthetic base (8) so that all tooth sockets (9) that extend to the lower face of the prosthetic base (8) are closed on the lower face.

11. The method according to any one of the preceding claims, **characterized in that** in step F) the basal sides (4) of the prefabricated prosthetic teeth (2) fixed in the processed blank (8) are shortened by at least 0.01 mm more than is specified by the data regarding the lower face of the virtual three-dimensional model (6') of the prosthetic base (8, 10, 20), preferably are shortened by 0.05 mm to 1 mm more, and particularly preferably are shortened by 0.1 mm to 0.5 mm more than is specified by the data regarding the lower face of the virtual three-dimensional model (6') of the prosthetic base (8, 10, 20).

12. The method according to any one of the preceding claims, **characterized in that** the position of at least one of the prosthetic teeth (2) in the finished wax prosthesis is changed, and/or
the positioning and/or the orientation of the virtual prosthetic teeth (2) in the virtual three-dimensional dental prosthesis model (5') are selected by simulating the positioning of the dental prosthesis in the oral cavity of the patient (78) and/or are selected by simulating the positioning and orientation of the prosthetic teeth (2) with respect to one another and/or with respect to the prosthetic base (8, 10, 20), the occlusal plane and/or the masticatory movements of the jaw preferably being additionally simulated.

13. The method according to any one of the preceding claims, **characterized in that** in step D) the tooth sockets (9) are designed to be so deep and shaped in such a way that each unprocessed prefabricated prosthetic tooth (2) is insertable into the according tooth socket (9) in such a way that the occlusal surfaces of the inserted prefabricated prosthetic teeth (2) correspond to the occlusal surfaces of the virtual three-dimensional dental prosthesis model (5'), and/or
the wax or the wax-like plastic material that can be manually shaped at less than 80°C has a dropping point between 50°C and 150°C, and preferably a dropping point between 85°C and 115°C.

14. A method for producing a dental prosthesis using a wax prosthesis, the wax prosthesis being produced by way of a method according to any one of the preceding claims, **characterized by** the further chronologically following steps:
H) Embedding the wax prosthesis, including the basally processed prosthetic teeth (2) fixed therein, into an investment material for producing a flask (14);
I) Boiling out or Melting out the prosthetic base (8) of the embedded wax prosthesis so that the flask (14) is created, in which the prosthetic teeth (2) are contained; and
J) Pouring a plastic material into the flask (14), curing the poured-in plastic material, and demolding the dental prosthesis thus generated from the flask (14),
or **characterized by** the further chronologically following steps:
H2) 3D scanning the wax prosthesis including the basally processed prosthetic teeth (2) fixed therein;
I2) Generating a CAD model (6') of a prosthetic base (8, 10, 20) of the dental prosthesis to be produced based on the 3D scan according to step H2), the CAD model (6') preferably additionally being generated based on the data of the virtual three-dimensional model (6') of the prosthetic base (8, 10, 20) for the try-in for calculating the lower face of the CAD model (6') of the prosthetic base (8, 10, 20) of the dental prosthesis to be produced;
J2) Producing the prosthetic base (10) of the dental prosthesis to be produced from plastic material using a CAM method based on the CAD model (6'); and
K2) Removing the prosthetic teeth (2) from the wax prosthesis, wax residue preferably being removed from the prosthetic teeth (2), and thereafter inserting and bonding the prosthetic teeth (2) into the prosthetic base (10) of the dental prosthesis to be produced.

## Revendications

1. Procédé de fabrication d'une prothèse en cire, dans lequel la prothèse en cire présente une base de prothèse (8) et plusieurs dents prothétiques (2) pré-confectionnées façonnées à la base et où le procédé est réalisé moyennant l'emploi d'un modèle de prothèse dentaire (5') tridimensionnel virtuel, le procédé comprenant les étapes suivantes :
A) la division du modèle de prothèse dentaire (5') tridimensionnel virtuel de la prothèse en cire à fabriquer physiquement en au moins un modèle tridimensionnel virtuel (2') des dents prothétiques (2) et un modèle tridimensionnel virtuel (6') d'une base de prothèse (8, 10, 20) ou l'emploi d'au moins un modèle tridimensionnel virtuel (2') existant des dents prothétiques (2) et d'un modèle tridimensionnel virtuel (6') existant de la base de prothèse (8, 10, 20),
B) la mise au point d'une ébauche en cire ou à base d'une matière plastique de type cire pouvant être façonnée manuellement en-dessous de 80 °C,
C) l'adaptation par enlèvement de matière de l'ébauche préparée avec un premier dispositif de FAO (88) de manière correspondante aux données de la face supérieure du modèle tridimensionnel virtuel (6') de la base de prothèse (8, 10, 20),
D) la fabrication de plusieurs alvéoles dentaires (9) dans la face supérieure de l'ébauche (8) à adapter, où pour chaque dent prothétique (2) pré-confectionnée à implanter selon le modèle de prothèse dentaire (5') tridimensionnel virtuel, une alvéole dentaire (9) est fabriquée dans l'ébauche (8), où les alvéoles dentaires (9) sont creusées aussi profondément que chaque dent prothétique (2) pré-confectionnée non adaptée puisse être implantée dans l'alvéole dentaire (9) respective de sorte que le plan d'occlusion des dents prothétiques (2) pré-confectionnées implantées corresponde au plan d'occlusion du modèle de prothèse dentaire (5') tridimensionnel virtuel, **caractérisé par** les étapes suivantes
E) d'implantation et de fixation des dents prothétiques (2) pré-confectionnées non adaptées dans les alvéoles dentaires (9) respectives de l'ébauche (8) adaptée à partir de la face supérieure,
F) de raccourcissement des faces basales (4) des dents prothétiques (2) pré-confectionnées fixées dans l'ébauche (8) adaptée avec un premier dispositif de FAO (88) ou un deuxième dispositif de FAO (86) conformément aux données concernant la face inférieure du modèle tridimensionnel virtuel (6') de la base de prothèse (8, 10, 20), où les dents prothétiques (2) pré-confectionnées sont davantage raccourcies que ne le prescrivent les données relatives à la face inférieure du modèle tridimensionnel virtuel (6') de la base de prothèse (8, 10, 20),
G) l'adaptation par enlèvement de matière de la face inférieure de l'ébauche (8) à adapter avec le premier dispositif de FAO (88) ou le deuxième dispositif de FAO (86), ou un troisième dispositif de FAO de manière correspondante aux données de la face inférieure du modèle tridimensionnel virtuel (6') de la base de prothèse (8, 10, 12).

2. Procédé selon la revendication 1, **caractérisé en ce que**
le premier dispositif de FAO (88), ou le deuxième dispositif de FAO (86), est une fraise (86, 88) commandée par ordinateur, notamment une fraise (86, 88) avec au moins 5 axes, ou le premier et le deuxième et éventuellement, le troisième dispositif de FAO (86, 88), sont des fraises (86, 88) commandées par ordinateur, notamment des fraises à 5 axes (86, 88), où l'adaptation par enlèvement de matière de l'ébauche (8) dans l'étape C) et dans l'étape G), ainsi que le raccourcissement des faces basales (4) des dents prothétiques (2) pré-confectionnées dans l'étape F), sont faits par des fraises, où, par exemple,
au moins la première fraise (88) commandée par ordinateur présente un angle d'attaque de plus de 25 °, notamment un angle d'attaque d'au moins 30 °, où, de préférence, toutes les fraises (86, 88) commandées par ordinateur employées présentent un angle d'attaque de plus de 25 °, notamment un angle d'attaque d'au moins 30 °.

3. Procédé selon l'une des revendications précédentes, **caractérisé en ce que**, dans l'étape E), les dents prothétiques (2) pré-confectionnées non adaptées sont fixées par collage dans les alvéoles dentaires (9) respectives, de préférence, par un collage avec de la cire ou avec la matière plastique de type cire, dont est constituée l'ébauche (8).

4. Procédé selon l'une des revendications précédentes, **caractérisé en ce que** les alvéoles dentaires (9) sont façonnées de telle façon que les dents prothétiques (2) pré-confectionnées affleurent avec les alvéoles dentaires (9) respectives, où, de préférence, les dents prothétiques (2) pré-confectionnées affleurent à la surface ou de manière cervicale avec les alvéoles dentaires (9) respectives au niveau d'un périmètre des dents prothétiques (2), en particulier au niveau de la couronne dentaire des dents prothétiques (2).

5. Procédé selon l'une des revendications précédentes, **caractérisé en ce que**, lors du raccourcissement basal des faces basales (4) des dents prothétiques (2) pré-confectionnées fixées dans l'ébauche (8) adaptée dans l'étape F), l'ébauche (8) adaptée est également adaptée par enlèvement de matière plus profondément sur sa face inférieure que ne prescrivent les données concernant la face inférieure du modèle tridimensionnel virtuel (6') de la base de prothèse (8, 10, 20), où, de préférence, les zones sur la face inférieure de l'ébauche (8) à adapter qui sont avoisinantes avec les dents prothétiques (2) pré-confectionnées fixées, sont davantage adaptées par enlèvement de matière que ne le prescrivent les données concernant la face inférieure du modèle tridimensionnel virtuel (6') de la base de prothèse (8, 10, 20).

6. Procédé selon l'une des revendications précédentes, **caractérisé en ce que** les étapes C) et D), et/ou les étapes F) et G), ont lieu en une étape de travail commune, et/ou les étapes C) et D) ont lieu chronologiquement après les étapes A) et B), l'étape E) a lieu chronologiquement après les étapes C) et D) et les étapes F) et G) ont lieu chronologiquement après l'étape E).

7. Procédé selon l'une des revendications précédentes, **caractérisé par** la saisie de données de surface de la gencive du patient (78) privé de dents ou partiellement privé de dents par un balayage en 3D intra-oral, par une prise d'empreinte de la gencive et un balayage en 3D de la prise d'empreinte, ou par une prise d'empreinte, la fabrication d'un modèle de la prise d'empreinte et un balayage en 3D du modèle avant l'étape A).

8. Procédé selon l'une des revendications précédentes, **caractérisé par** la création d'un modèle de prothèse dentaire (5') tridimensionnel virtuel ou du modèle (6') tridimensionnel virtuel de la base de prothèse (8, 10, 20) par un procédé de FAO, où, pour ce faire, des données de FAO pour la forme extérieure des dents prothétiques (2) pré-confectionnées sont utilisées, et/ou les données de surface de la gencive sont employées.

9. Procédé selon l'une des revendications précédentes, **caractérisé en ce que** les alvéoles dentaires (9) dans l'étape D) sont formées avec des aides au positionnement de sorte que la forme de chaque alvéole dentaire (9) prévoit la dent prothétique (2) pré-confectionnée à implanter respectivement, de préférence, la forme de chaque alvéole dentaire (9) ne correspond qu'à la dent prothétique (2) pré-confectionnée à implanter respectivement, et/ou
dans l'étape F) ou G), au moins deux des alvéoles dentaires (9) sont transformées en trous traversants dans la base de prothèse (8), par lesquels les faces basales (4) d'au moins deux des dents prothétiques (2) à façonner sont accessibles à partir de la face inférieure de la base de prothèse (8).

10. Procédé selon l'une des revendications précédentes, **caractérisé par** l'application d'une cire ou d'une matière plastique de type cire pouvant être façonnée manuellement en-dessous de 80 °C sur la face inférieure de la base de prothèse (8) de sorte que toutes les alvéoles dentaires (9) atteignant la face inférieure de la base de prothèse (8) se trouvent obturées sur la face inférieure.

11. Procédé selon l'une des revendications précédentes, **caractérisé en ce que**, dans l'étape F), les faces basales (4) des dents prothétiques pré-confectionnées (2) fixées dans l'ébauche (8) adaptée sont davantage raccourcies d'au moins 0,01 mm que ne le prescrivent les données concernant la face inférieure du modèle tridimensionnel virtuel (6') de la base de prothèse (8, 10, 20), raccourcies davantage de préférence de 0,05 mm à 1 mm, raccourcies davantage de manière particulièrement préférée de 0,1 mm à 0,5 mm, que ne le prescrivent les données concernant la face inférieure du modèle tridimensionnel virtuel (6') de la base de prothèse (8, 10, 20).

12. Procédé selon l'une des revendications précédentes, **caractérisé en ce que** la position d'au moins une des dents prothétiques (2) est modifiée dans la prothèse en cire terminée, et/ou
la position, et/ou l'orientation, des dents prothétiques (2) virtuelles dans le modèle de prothèse dentaire (5') tridimensionnel virtuel est choisie par une simulation de la position de la prothèse dentaire dans l'espace buccal du patient (78), et/ou par une simulation de la position et de l'orientation des dents prothétiques (2) les unes par rapport aux autres, et/ou par rapport à la base de prothèse (8, 10, 20), où, de préférence, en plus, le plan d'occlusion et/ou les mouvements de mastication de la gencive sont simulés.

13. Procédé selon l'une des revendications précédentes, **caractérisé en ce que**, dans l'étape D), les alvéoles dentaires (9) sont conçues aussi profondes et sont façonnées de telle manière que chaque dent prothétique (2) pré-confectionnée non adaptée peut être implantée dans l'alvéole dentaire (9) respective, de sorte que les surfaces d'occlusion des dents prothétiques (2) pré-confectionnées implantées correspondent aux surfaces d'occlusion du modèle de prothèse dentaire (5') tridimensionnel virtuel et/ou
la cire, ou la matière plastique de type cire pouvant être façonnée manuellement en-dessous de 80 °C, présente un point de goutte entre 50 °C et 150 °C, de préférence un point de goutte entre 85 °C et 115 °C.

14. Procédé de fabrication d'une prothèse dentaire, moyennant l'emploi d'une prothèse en cire, où la prothèse en cire est fabriquée avec un procédé selon une des revendications précédentes, **caractérisé par** les étapes successives chronologiques suivantes
H) l'incorporation de la prothèse en cire avec les dents prothétiques (2) adaptées à la base y étant fixées dans une matière d'incorporation permettant la réalisation d'une cuvette (14),
I) le réchauffement ou la fusion de la base de prothèse (8) de la prothèse en cire incorporée, de sorte que la cuvette (14) se crée dans laquelle sont contenues les dents prothétiques (2), et
J) le remplissage d'une matière plastique dans la cuvette (14), le durcissement de la matière plastique versée et le démoulage de la prothèse dentaire ainsi créée à partir de la cuvette (14),
ou **caractérisé par** les autres étapes successives chronologiques
H2) le balayage en 3D de la prothèse en cire avec les dents prothétiques (2) adaptées à la base y étant fixées,
I2) la création d'un modèle de FAO (6') d'une base de prothèse (8, 10, 20) de la prothèse dentaire à fabriquer sur la base du balayage 3D d'après l'étape H2), où, par exemple, le modèle FAO (6') est créé en outre sur la base des données du modèle tridimensionnel virtuel (6') de la base de prothèse (8, 10, 20) pour la gamme de cire pour le calcul de la face inférieure du modèle de FAO (6') de la base de prothèse (8, 10, 20) de la prothèse dentaire à fabriquer,
J2) la fabrication de la base de prothèse (10) de la prothèse dentaire à fabriquer en matière plastique avec un procédé de FAO sur la base du modèle de FAO (6'), et
K2) le retrait des dents prothétiques (2) de la prothèse en cire, où de préférence des restes de cire sont enlevés des dents prothétiques (2) et ensuite, l'implantation et le collage des dents prothétiques (2) dans la base de prothèse (10) de la prothèse dentaire à fabriquer.
